# EUROPEAN PATENT APPLICATION

(11) **EP 4 622 170 A1**
(43) Date of publication of application: **24.09.2025**
(21) Application number: 23890469.2
(22) Date of filing: 17.10.2023
(51) Int. Cl.: H04L 9/40

(54) **INFORMATION PROCESSING METHOD AND APPARATUS, AND READABLE STORAGE MEDIUM**

(30) Priority: 14.11.2022 CN 202211425044
(71) Applicant: Datang Mobile Communications Equipment Co., Ltd., Beijing 100085 (CN)
(72) Inventor: WANG, Yapeng, Beijing 100085 (CN); CHENG, Zhimi, Beijing 100085 (CN); LIU, Xianfeng, Beijing 100085 (CN); GU, Xiaofei, Beijing 100085 (CN)
(74) Representative: Studio Torta S.p.A.
(86) International application number: PCT/CN2023/124882
(87) International publication number: WO 2024/104032

(57) **Abstract**

The present application provides an information processing method, an information processing device, and a computer-readable storage medium, relating to the field of communication technologies. The method includes: receiving, by a terminal, a first indication sent by a radio access network or an access management function; and in response to the first indication, sending, by the terminal, computational power data of the terminal to a computational power network management center via the radio access network or the access management function.

## Description

### CROSS-REFERENCE TO RELATED APPLICATIONS

This application claims a priority to Chinese Patent Application No. 202211425044.X filed in China on November 14, 2022, entitled "Information Processing Method, Device, and Computer-Readable Storage Medium", the entire contents of which are incorporated herein by reference.

### TECHNICAL FIELD

The present disclosure relates to the field of communication technologies, and in particular to an information processing method, device, and computer-readable storage medium.

### BACKGROUND

Currently, a computing power network is primarily oriented toward bearer networks, and computing power nodes mainly include resources such as physical servers, virtual machines, containers, and heterogeneous hardware. In a scenario where a mobile communication network is integrated with a computing power network, a terminal can also be registered as a computing power node, thereby providing computing power services.

In the scenario where the mobile communication network is integrated with the computing power network, how a computing power network management center obtains the computing power usage of the terminal for purposes such as perception and analysis is a technical problem to be solved.

### SUMMARY

Embodiments of the present disclosure provide an information processing method, device, and computer-readable storage medium, so that a computing power network management center can perform perception and analysis on computing power usage of a terminal.

In a first aspect, embodiments of the present disclosure provide an information processing method applied to a terminal, the method comprising:
receiving a first indication sent by a radio access network or an access management function;
in response to the first indication, sending computing power data of the terminal to a computing power network management center via the radio access network or the access management function.

Optionally, receiving the first indication sent by the radio access network comprises:
receiving a first measurement configuration parameter sent by the radio access network, wherein the first measurement configuration parameter is used to indicate the first indication; or
receiving a first request sent by the radio access network, wherein the first request carries the first indication.

Optionally, receiving the first indication sent by the access management function comprises:
receiving a computing power registration response sent by the access management function, wherein the computing power registration response carries the first indication; or
receiving a second request sent by the access management function, wherein the second request carries the first indication.

Optionally, the first indication is used to indicate one or more of the following information:
a unique identifier of the computing power network management center;
a perception resource type;
a computing power reporting period.

Optionally, in response to the first indication, sending the computing power data of the terminal to the computing power network management center via the radio access network or the access management function comprises:
sending the computing power data to the radio access network, wherein the computing power data is used to send the computing power data to the computing power network management center via the radio access network; or
sending the computing power data to the radio access network, wherein the computing power data is used to send the computing power data to the computing power network management center via the radio access network and the access management function; or
sending the computing power data to the radio access network, wherein the computing power data is used to send the computing power data to the computing power network management center via a user plane channel of the radio access network.

Optionally, the computing power data comprises one or more of the following:
a current status of a resource;
a current used capacity of a resource;
a current available capacity of a resource;
a current load of a resource.

Optionally, the method further comprises:
if a location of the terminal changes, sending a second indication to a target radio access network or a target access management function, wherein the second indication is used to indicate that the terminal is a computing power node;
wherein the target radio access network is a radio access network accessed by the terminal after the location change, and the target access management function is an access management function accessed by the terminal after the location change.

In a second aspect, embodiments of the present disclosure provide an information processing method applied to a radio access network or an access management function, the method comprising:
sending a first indication to a terminal;
receiving computing power data sent by the terminal in response to the first indication;
sending the computing power data to a computing power network management center.

Optionally, the method further comprises:
receiving a third indication sent by the computing power network management center, wherein the third indication is used to indicate a request for the computing power data of the terminal.

Optionally, the first indication is used to indicate one or more of the following information:
a unique identifier of the computing power network management center;
a perception resource type;
a computing power reporting period;
   or
the third indication comprises one or more of the following information:
   a unique identifier or a list of unique identifiers of a computing power node;
   a device identifier or a list of device identifiers;
   a perception resource type;
   a computing power reporting period.

Optionally, the method is applied to the radio access network, and sending the first indication to the terminal comprises:
sending a first measurement configuration parameter to the terminal, wherein the first measurement configuration parameter is used to indicate the first indication; or
sending a first request to the terminal, wherein the first request carries the first indication.

Optionally, the method is applied to the radio access network, and receiving the computing power data sent by the terminal in response to the first indication comprises:
receiving the computing power data sent by the terminal via an air interface message or a measurement report.

Optionally, the method is applied to the radio access network, and sending the computing power data to the computing power network management center comprises:
forwarding the computing power data to the access management function so that the access management function sends the computing power data to the computing power network management center; or
sending the computing power data to the computing power network management center via a user plane channel; or
sending a computing power report to the computing power network management center, wherein the computing power report comprises the computing power data.

Optionally, the method is applied to the radio access network, wherein the radio access network comprises a target radio access network, the target radio access network being a radio access network accessed by the terminal after a location change; the method further comprises:
upon determining that the terminal is a computing power node, obtaining the third indication from a source radio access network, wherein the source radio access network is a radio access network accessed by the terminal before the location change;
sending a fourth indication or a second measurement configuration parameter to the terminal according to the third indication, wherein the second measurement configuration parameter is used to indicate the fourth indication, and the fourth indication is used to request the computing power data of the terminal;
sending a fifth indication to the computing power network management center, wherein the fifth indication is used to indicate that the radio access network accessed by the terminal has changed.

Optionally, the first measurement configuration parameter or the second measurement configuration parameter comprises one or more of the following:
a computing power measurement object used to indicate a resource to be perceived;
a measurement interval used to indicate a time interval for performing resource perception;
a computing power measurement triggering event.

Optionally, the method is applied to the access management function, and sending the first indication to the terminal comprises:
sending a computing power registration response to the terminal, wherein the computing power registration response carries the first indication; or
sending a second request to the terminal, wherein the second request carries the first indication.

Optionally, the method is applied to the access management function, and receiving the third indication sent by the computing power network management center comprises:
receiving a third request sent by the computing power network management center, wherein the third request carries the third indication; or
receiving a computing power registration response sent by the computing power network management center, wherein the computing power registration response carries the third indication.

Optionally, the method is applied to the access management function, and sending the computing power data to the computing power network management center comprises:
receiving the computing power data forwarded by the radio access network;
sending the computing power data to the computing power network management center.

Optionally, the access management function comprises a source access management function or a target access management function, and the method further comprises:
upon determining that the location of the terminal has changed, sending a sixth indication to the computing power network management center, wherein the sixth indication is used to indicate that the location of the terminal has changed, and the sixth indication carries a correspondence among the terminal, the radio access network, and the access management function.
wherein the source access management function is an access management function accessed by the terminal before the location change, and the target access management function is an access management function accessed by the terminal after the location change.

Optionally, the access management function comprises the target access management function, and the method further comprises:
receiving a seventh indication sent by the computing power network management center, wherein the seventh indication is used to request the computing power data of the terminal.

Optionally, the access management function comprises the target access management function, and the method further comprises:
receiving a location change notification subscribed by the computing power network management center from the source access management function.

Optionally, the method is applied to the access management function, and the access management function comprises the target access management function, the method further comprising:
upon determining that the terminal is a computing power node, obtaining the third indication from the source access management function, and sending an eighth indication to the terminal according to the third indication, wherein the eighth indication is used to request the computing power data of the terminal.
sending a ninth indication to the computing power network management center, wherein the ninth indication is used to indicate that the access management function accessed by the terminal has changed.

Optionally, the computing power data comprises one or more of the following:
a current status of a resource;
a current used capacity of a resource;
a current available capacity of a resource;
a current load of a resource.

In a third aspect, embodiments of the present disclosure provide an information processing method applied to a computing power network management center, the method comprising:
sending a third indication to a radio access network or an access management function, wherein the third indication is used to request the computing power data of a terminal.
receiving the computing power data sent by the radio access network or the access management function in response to the third indication.

Optionally, sending the third indication to the access management function comprises:
sending a third request to the access management function, wherein the third request carries the third indication; or
sending a computing power registration response to the access management function, wherein the computing power registration response carries the third indication.

Optionally, receiving the computing power data sent by the radio access network or the access management function in response to the third indication comprises:
receiving the computing power data sent by the radio access network via a user plane channel; or
receiving a computing power report sent by the radio access network, wherein the computing power report comprises the computing power data; or
receiving the computing power data sent by the access management function, wherein the computing power data is forwarded by the radio access network to the access management function.

Optionally, the third indication comprises one or more of the following information:
a unique identifier or a list of unique identifiers of a computing power node;
a device identifier or a list of device identifiers;
a perception resource type;
a computing power reporting period.

Optionally, the method further comprises:
subscribing to a location change notification of the terminal from the source access management function.
wherein the source access management function is an access management function accessed by the terminal before the location change.

Optionally, the method further comprises:
receiving a sixth indication sent by the source access management function or the target access management function when the location of the terminal changes, wherein the sixth indication is used to indicate that the location of the terminal has changed, and the sixth indication carries a correspondence among the terminal, the radio access network, and the access management function.
wherein the target access management function is an access management function accessed by the terminal after the location change.

Optionally, the method further comprises:
receiving a fifth indication sent by the target radio access network, wherein the fifth indication is used to indicate that the radio access network accessed by the terminal has changed;
receiving the computing power data of the terminal sent by the target radio access network.
wherein the target radio access network is a radio access network accessed by the terminal after the location change.

Optionally, the method further comprises:
receiving a ninth indication sent by the target access management function, wherein the ninth indication is used to indicate that the access management function accessed by the terminal has changed;
receiving the computing power data of the terminal sent by the target access management function.
wherein the target access management function is an access management function accessed by the terminal after the location change.

In a fourth aspect, embodiments of the present disclosure provide an information processing apparatus applied to a terminal, the information processing apparatus comprising:
a first receiving unit configured to receive a first indication sent by a radio access network or an access management function;
a first processing unit configured to, in response to the first indication, send computing power data of the terminal to a computing power network management center via the radio access network or the access management function.

In a fifth aspect, embodiments of the present disclosure provide an information processing apparatus applied to a radio access network or an access management function, the information processing apparatus comprising:
a first sending unit configured to send a first indication to a terminal;
a first receiving unit configured to receive computing power data sent by the terminal in response to the first indication;
a second sending unit configured to send the computing power data to a computing power network management center.

In a sixth aspect, embodiments of the present disclosure provide an information processing apparatus applied to a computing power network management center, the information processing apparatus comprising:
a first sending unit configured to send a third indication to a radio access network or an access management function, wherein the third indication is used to request computing power data of a terminal;
a first receiving unit configured to receive the computing power data sent by the radio access network or the access management function in response to the third indication.

In a seventh aspect, embodiments of the present disclosure provide an information processing apparatus applied to a terminal, the information processing apparatus comprising a memory, a transceiver, and a processor:
the memory configured to store a computer program; the transceiver configured to transmit and receive data under control of the processor; the processor configured to read the computer program in the memory and execute the following operations:
receiving a first indication sent by a radio access network or an access management function;
in response to the first indication, sending computing power data of the terminal to a computing power network management center via the radio access network or the access management function.

In an eighth aspect, embodiments of the present disclosure provide an information processing apparatus applied to a radio access network or an access management function, the information processing apparatus comprising a memory, a transceiver, and a processor:
the memory configured to store a computer program; the transceiver configured to transmit and receive data under control of the processor; the processor configured to read the computer program in the memory and execute the following operations:
sending a first indication to a terminal;
receiving computing power data sent by the terminal in response to the first indication;
sending the computing power data to a computing power network management center.

In a ninth aspect, embodiments of the present disclosure provide an information processing apparatus applied to a computing power network management center, the information processing apparatus comprising a memory, a transceiver, and a processor:
the memory configured to store a computer program; the transceiver configured to transmit and receive data under control of the processor; the processor configured to read the computer program in the memory and execute the following operations:
sending a third indication to a radio access network or an access management function, wherein the third indication is used to request computing power data of a terminal;
receiving the computing power data sent by the radio access network or the access management function in response to the third indication.

In a tenth aspect, embodiments of the present disclosure further provide a communication device comprising: a transceiver, a memory, a processor, and a program stored in the memory and executable on the processor, wherein the processor executes the program to implement the steps of the information processing method described above.

In an eleventh aspect, embodiments of the present disclosure further provide a processor-readable storage medium, wherein a computer program is stored on the processor-readable storage medium, and the computer program, when executed by the processor, implements the steps of the information processing method described above.

In the embodiments of the present disclosure, a terminal may send computing power data of the terminal to a radio access network or an access management function according to the first indication, so that a computing power network management center can obtain the computing power data of the terminal, and further perform perception and analysis on computing power usage of the terminal based on the computing power data.

### BRIEF DESCRIPTION OF THE DRAWINGS

FIG. 1 shows a first flow chart of an information processing method according to an embodiment of the present disclosure.
FIG. 2 shows a second flow chart of an information processing method according to an embodiment of the present disclosure.
FIG. 3 shows a third flow chart of an information processing method according to an embodiment of the present disclosure.
FIG. 4 shows a fourth flow chart of an information processing method according to an embodiment of the present disclosure.
FIG. 5 shows a fifth flow chart of an information processing method according to an embodiment of the present disclosure.
FIG. 6 shows a sixth flow chart of an information processing method according to an embodiment of the present disclosure.
FIG. 7 shows a seventh flow chart of an information processing method according to an embodiment of the present disclosure.
FIG. 8 shows an eighth flow chart of an information processing method according to an embodiment of the present disclosure.
FIG. 9 shows a ninth flow chart of an information processing method according to an embodiment of the present disclosure.
FIG. 10 shows a tenth flow chart of an information processing method according to an embodiment of the present disclosure.
FIG. 11 shows an eleventh flow chart of an information processing method according to an embodiment of the present disclosure.
FIG. 12 shows a first schematic block diagram of an information processing apparatus according to an embodiment of the present disclosure.
FIG. 13 shows a second schematic block diagram of an information processing apparatus according to an embodiment of the present disclosure.
FIG. 14 shows a third schematic block diagram of an information processing apparatus according to an embodiment of the present disclosure.
FIG. 15 shows a fourth schematic block diagram of an information processing apparatus according to an embodiment of the present disclosure.
FIG. 16 shows a fifth schematic block diagram of an information processing apparatus according to an embodiment of the present disclosure.
FIG. 17 shows a sixth schematic block diagram of an information processing apparatus according to an embodiment of the present disclosure.
FIG. 18 shows a seventh schematic block diagram of an information processing apparatus according to an embodiment of the present disclosure.
FIG. 19 shows an eighth schematic block diagram of an information processing apparatus according to an embodiment of the present disclosure.

### DETAILED DESCRIPTION

In the embodiments of the present disclosure, the term "and/or" describes an association relationship of associated objects, indicating three possible relationships; for example, "A and/or B" may indicate: A alone, both A and B, or B alone. The character "/" generally indicates an "or" relationship between the associated objects before and after it.

In the embodiments of the present disclosure, the term "a plurality of" refers to two or more; other quantifiers are interpreted similarly.

The technical solutions in the embodiments of the present disclosure will be described clearly and completely with reference to the accompanying drawings of the embodiments of the present disclosure. It is obvious that the described embodiments are only part of the embodiments of the present disclosure, and not all embodiments. Based on the embodiments of the present disclosure, all other embodiments obtained by those skilled in the art without creative efforts shall fall within the protection scope of the present disclosure.

Embodiments of the present disclosure provide an information processing method and apparatus, configured to enable a computing power network management center to perform perception and analysis on computing power usage of a terminal.

The method and the apparatus are based on the same inventive concept in the present application. Since the principles of solving the problem by the apparatus and the method are similar, the implementations of the apparatus and the method may refer to each other, and repeated descriptions will not be provided.

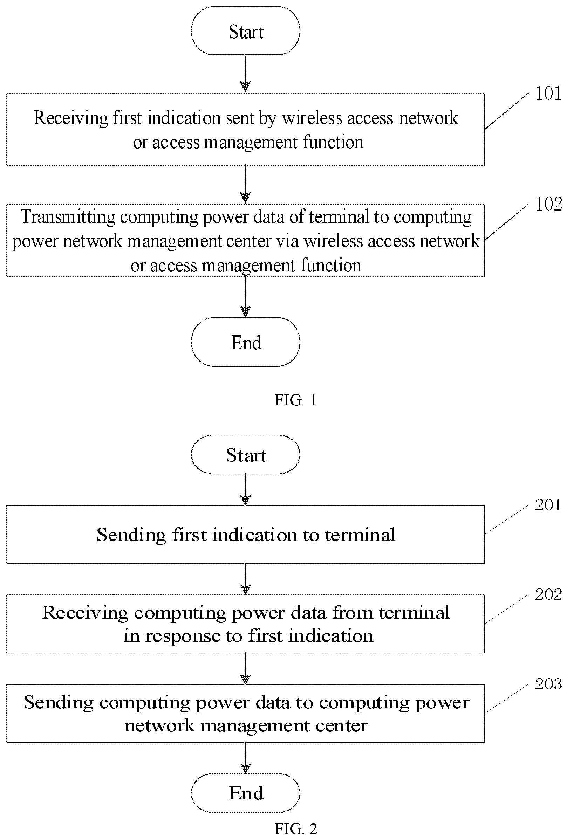

As shown in FIG. 1, an embodiment of the present disclosure provides an information processing method applied to a terminal, comprising the following steps:
Step 101: receiving, by the terminal, a first indication sent by a radio access network or an access management function;
In the embodiment of the present disclosure, after the terminal completes computing power registration in a computing power network management center, the terminal becomes a valid computing power node under management. During registration, the computing power network management center specifies basic information of the current computing power node, such as a device identifier (a unique identifier of the terminal), a computing power type, a computing power capacity, a computing power location, and an identifier of a base station accessed by the terminal, and assigns a unique identifier of the computing power node to the computing power node.

In this step, the radio access network or the access management function may send the first indication to the terminal based on a trigger from the computing power network management center, or may proactively send the first indication to the terminal when the location of the terminal changes. Accordingly, the terminal receives the first indication.

Specifically, receiving the first indication sent by the radio access network by the terminal may comprise:
receiving, by the terminal, a first measurement configuration parameter sent by the radio access network, wherein the first measurement configuration parameter is used to indicate the first indication; or receiving a first request sent by the radio access network, wherein the first request carries the first indication. In the embodiment of the present disclosure, the specific implementation form of the first request is not limited, for example, it may be a Radio Resource Control (RRC) request.

For example, the radio access network may directly send a computing power data perception request message to the terminal through broadcasting or an independent request message, or may configure a measurement configuration parameter (i.e., the first measurement configuration parameter) of the terminal through an air interface RRC connection reconfiguration process. The measurement configuration parameter may configure a computing power measurement object and a computing power measurement triggering event.

The first measurement configuration parameter comprises one or more of the following:
a computing power measurement object, used to indicate a resource to be perceived, which may be the same as the resource indicated by the computing power network management center to the radio access network or the access management function, referring to a computing power resource providing computing capability on the terminal, mainly referring to heterogeneous hardware resources such as a Central Processing Unit (CPU) and a Graphics Processing Unit (GPU), or an application running on the terminal;
a measurement interval, used to indicate a time interval for performing resource perception; when a periodic measurement is set, setting a period for the terminal to perform the measurement, the period being generally equal to a reporting period indicated by the computing power network management center; stopping the measurement and reporting when a timer expires or when the computing power network management center no longer requires data reporting;
a computing power measurement triggering event, set for event-triggered measurement. In the embodiment of the present disclosure, the event type is a computing power measurement event (with a "computing power node indication" being "yes" ). The terminal may indicate whether it is a computing power node by the computing power node indication. When the computing power node indication of the terminal is "yes," the measurement event is triggered to perform computing power data measurement and reporting. After the event is triggered, the terminal may also perform periodic measurement and reporting until the timer expires or the trigger condition becomes invalid, and stops measurement and reporting. A scenario where the trigger condition becomes invalid is, for example, when the terminal deregisters and is no longer a valid computing power node, at which time the "computing power node indication" becomes "no".

Specifically, receiving the first indication sent by the access management function by the terminal may comprise:
receiving, by the terminal, a computing power registration response sent by the access management function, wherein the computing power registration response carries the first indication; or receiving a second request sent by the access management function, wherein the second request carries the first indication. In the embodiment of the present disclosure, the specific implementation form of the second request is not limited, for example, it may be Non-Access Stratum (NAS) signaling.

In this case, the first indication is used to indicate one or more of the following information:
a unique identifier of the computing power network management center: indicating information of the computing power network management center to which the computing power data needs to be reported, such as an identifier;
a perceived resource type: a computing power resource providing computing capability on the terminal, mainly referring to heterogeneous hardware resources such as CPU and GPU, or an application running on the terminal;
a computing power reporting period: a computing power perception period for the terminal to report computing power data, for example, 15 minutes; a specific period may be set according to actual computing power monitoring requirements in different scenarios.

Step 102: in response to the first indication, sending, by the terminal, computing power data of the terminal to the computing power network management center via the radio access network or the access management function.

In this step, the terminal may send the computing power data to the radio access network via an air interface message or a measurement report, wherein the computing power data is used to send the computing power data to the computing power network management center via the radio access network; or may send the computing power data to the radio access network, wherein the computing power data is used to send the computing power data to the computing power network management center via the radio access network and the access management function; or may send the computing power data to the radio access network, wherein the computing power data is used to send the computing power data to the computing power network management center via a user plane channel of the radio access network.

Specifically, when the terminal reports computing power data via the radio access network, the terminal may send the computing power data to the radio access network via an air interface message or a Measurement Report (MR), so that the radio access network sends the computing power data to the computing power network management center.

Specifically, when the terminal reports computing power data via the access management function, the computing power data may be reported to the radio access network, and then forwarded by the radio access network to the access management function via a signaling plane, and the access management function sends the computing power data to the computing power network management center; or the terminal may establish a user plane channel to the computing power network management center. After the terminal sends the computing power data to the radio access network, the radio access network sends the computing power data to the computing power network management center via the user plane channel. For example, the radio access network sends the computing power data to the computing power network management center via a user plane function. In the embodiment of the present disclosure, the specific manner of establishing the user plane channel is not limited.

The computing power data comprises one or more of the following:
a current status of a resource: for example, an available or unavailable status, or a normal or faulty status, with values set according to operator requirements in actual scenarios;
a current used capacity of a resource: reporting a used capacity of heterogeneous hardware resources such as a CPU or a GPU;
a current available capacity of a resource: reporting a remaining available capacity of heterogeneous hardware resources such as a CPU or a GPU;
a current load of a resource: reporting a current load of an application-type resource.

In the embodiment of the present disclosure, the terminal may send computing power data of the terminal to the radio access network or the access management function according to the first indication, so that the computing power network management center can obtain the computing power data of the terminal, and further perceive and analyze a computing power usage condition of the terminal according to the computing power data.

Optionally, based on the above embodiment, if the location of the terminal changes, the terminal sends a second indication to a target radio access network or a target access management function, wherein the second indication is used to indicate that the terminal is a computing power node; the target radio access network is a radio access network accessed by the terminal after the location change, and the target access management function is an access management function accessed by the terminal after the location change. Therefore, a connection to the target access management function or the target radio access network may be established to continue reporting computing power data to the computing power network management center. The second indication may carry a computing power node indication, where if the computing power node indication is yes, it indicates that the terminal is a computing power node; otherwise, it indicates that the terminal is not a computing power node.

In this way, continuity of obtaining computing power data by the computing power network management center can be ensured when the location of the terminal changes.

In an embodiment of the present disclosure, the computing power data reported by the terminal may be used for one or more of the following purposes:
(1) under a near real-time monitoring scenario, by reporting computing power measurement reports (MRs), a computing power network management center can obtain the computing capability and computing state of the terminal; support may be provided for the computing power network management center to perform computing power scheduling, such as performing resource scheduling during idle periods and performing resource service restrictions during busy periods; for example, no task scheduling is performed for nodes with excessive load, or cooperative communication between mobile terminals is performed when necessary;
(2) by performing statistical analysis on the computing power data, based on the statistical analysis results of computing power usage, the computing power usage in different time periods may be analyzed; computing power priorities may be classified according to time domains, and time-domain priority scheduling may be performed;
(3) for terminal mobility scenarios, support may be provided for statistically analyzing an activity range of the terminal and a service range in which the terminal provides computing power; more reasonable computing power resource scheduling may be performed;
(4) the computing power provision mode may be exclusive or shared; under the shared computing power mode, the computing power usage may be monitored in real time via the measurement reports; more reasonable and efficient multi-party shared computing power services may be implemented; support may also be provided for computing power expansion and contraction of the computing power node to achieve optimal utilization of the computing power;
(5) based on the computing power reports, periodic statistics may be performed to assist system performance analysis; for example, at a cell level, determining which cells have high computing power utilization and which cells have low computing power utilization.

As shown in FIG. 2, an embodiment of the present disclosure provides an information processing method applied to a radio access network; the method includes the following steps as shown in FIG. 2:
Step 201: sending a first instruction to a terminal.

Specifically, in this step, the radio access network may send a first measurement configuration parameter to the terminal; the first measurement configuration parameter is used to indicate the first instruction; or, send a first request to the terminal; the first request carries the first instruction.

The interpretation of the first request, the first instruction, and the first measurement configuration parameter may refer to the description of the foregoing method embodiment.

As previously described, the radio access network may send the first instruction to the terminal triggered by the computing power network management center; or may actively send the first instruction to the terminal when the location of the terminal changes; therefore, if the first instruction is sent in response to the trigger of the computing power network management center, in this embodiment of the present disclosure, the radio access network may further receive a third instruction sent by the computing power network management center; the third instruction is used to indicate a request for computing power data of the terminal; the specific indication manner of the third instruction is not specifically limited in this embodiment of the present disclosure; for example, it may be carried in a certain request, such as a computing power sensing requirement.

The third instruction includes one or more of the following information:
a unique identifier or identifier list of a computing power node: indicates the unique identifier of the computing power node of the terminal under the coverage of the radio access network that needs to report computing power data; the identifier is allocated by the computing power network management center when the terminal performs computing power registration, and is uniquely identified in the computing power network management center; when data of multiple computing power nodes (terminals) need to be sensed, the identifier list is carried; if the identifier list is empty, by default, the data of all computing power nodes under the radio access network is reported;
a device identifier or device identifier list: a unique identifier or identifier list of the terminal mapped to the unique identifier or identifier list of the computing power node;
a sensed resource type: computing power resources provided on the terminal, mainly referring to heterogeneous hardware resources such as CPU and GPU; or applications running on the terminal;
a computing power report period: a report period for the radio access network to feedback the computing power report to the computing power network management center, such as 15 minutes, 1 hour, 1 day; the specific period may be set according to actual computing power monitoring requirements in different scenarios; for nodes whose computing power changes infrequently, the computing power report period may be set relatively longer.

Step 202: receiving computing power data sent by the terminal in response to the first instruction.

In this step, the radio access network may receive the computing power data sent by the terminal via an air interface message or a measurement report.

Step 203: sending the computing power data to the computing power network management center.

In this step, the radio access network may forward the computing power data to the access management function, so that the access management function sends the computing power data to the computing power network management center; or, the radio access network may send the computing power data to the computing power network management center through a user plane channel; or, the radio access network may send a computing power report to the computing power network management center; the computing power report includes the computing power data.

The contents included in the computing power data may refer to the description of the foregoing method embodiment.

In this embodiment of the present disclosure, the terminal may send the computing power data of the terminal to the radio access network or the access management function according to the first instruction; thus, the computing power network management center may obtain the computing power data of the terminal; further, the computing power usage of the terminal may be sensed and analyzed based on the computing power data.

In this embodiment of the present disclosure, the radio access network may include an original radio access network or a target radio access network; the original radio access network refers to the radio access network accessed by the terminal before location change; the target radio access network refers to the radio access network accessed by the terminal after location change; the above process is applicable to both the original radio access network and the target radio access network.

Optionally, based on the foregoing embodiment, in a scenario where communication is established between the computing power network management center and the radio access network, if the location of the terminal changes, for the target radio access network, when determining that the terminal is a computing power node, the target radio access network obtains the third instruction from the original radio access network; sends a fourth instruction or a second measurement configuration parameter to the terminal according to the third instruction; the second measurement configuration parameter is used to indicate the fourth instruction; the fourth instruction is used to request the computing power data of the terminal; meanwhile, the target radio access network sends a fifth instruction to the computing power network management center; the fifth instruction is used to indicate that the radio access network accessed by the terminal has changed; the contents included in the second measurement configuration parameter are the same as those included in the first measurement configuration parameter.

The specific information included in the fourth instruction may be the same as the specific information included in the first instruction; or may be modified as needed.

The second measurement configuration parameter includes one or more of the following:
a computing power measurement object, used to indicate the resource to be sensed; a measurement interval, used to indicate the time interval for sensing the resource; a computing power measurement trigger event.

The contents included in the second measurement configuration parameter may be the same as the specific information included in the first measurement configuration parameter; or may be modified as needed.

For example, in a scenario where communication is established between the computing power network management center and the radio access network, after the terminal moves to the target radio access network, the target radio access network determines whether the terminal is a computing power node based on the "computing power node indication"; obtains the measurement configuration information related to the computing power MR from the original radio access network; and reconfigures the measurement requirements based on the response of the original radio access network; the measurement configuration parameter of the computing power MR fed back from the original radio access network to the target radio access network is the content included in the third instruction; subsequently, the target radio access network may request the terminal to report the computing power data; this process is the same in principle as the interaction between the radio access network and the terminal in the foregoing embodiment; meanwhile, the target radio access network feeds back a radio access network change notification to the computing power network management center; the notification indicates that subsequent computing power data of the terminal is reported by the target radio access network to the computing power network management center.

By this way, the target radio access network actively requests the computing power data and reports the computing power data to the computing power network management center; this can facilitate ensuring the continuity of obtaining computing power data by the computing power network management center when the terminal location changes.

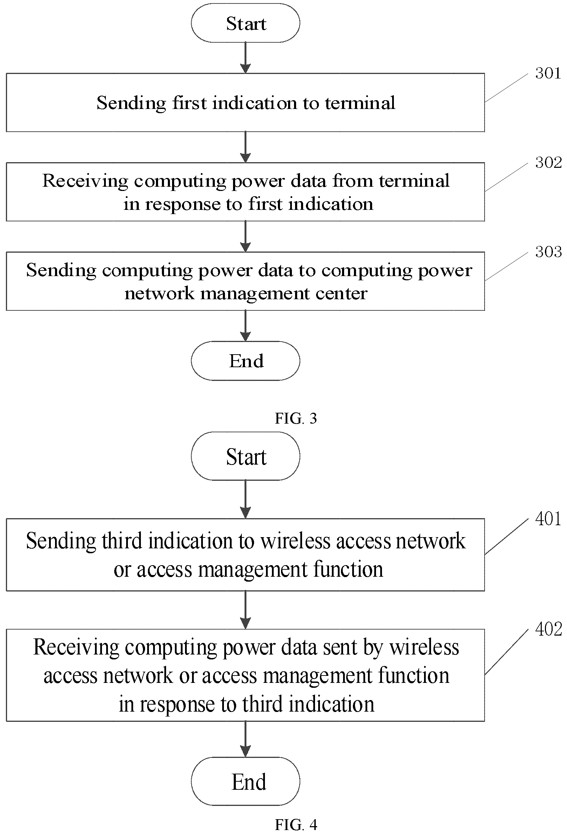

As shown in FIG. 3, an embodiment of the present disclosure provides an information processing method applied to an access management function; the method includes the following steps as shown in FIG. 3:
Step 301: sending a first instruction to a terminal.

Specifically, in this step, the access management function may send a computing power registration response to the terminal; the computing power registration response carries the first instruction; or, send a second request to the terminal; the second request carries the first instruction; the interpretation of the second request may refer to the foregoing embodiment.

The interpretation of the second request and the first instruction may refer to the description of the foregoing method embodiment.

As previously described, the access management function may send the first instruction to the terminal triggered by the computing power network management center; or may actively send the first instruction to the terminal when the location of the terminal changes; therefore, if the first instruction is sent in response to the trigger of the computing power network management center, in this embodiment of the present disclosure, the access management function may further receive a third instruction sent by the computing power network management center; the third instruction is used to indicate a request for computing power data of the terminal; the contents of the third instruction may refer to the description of the foregoing embodiment.

Specifically, the access management function may receive a third request sent by the computing power network management center; the third request carries the third instruction; or, receive a computing power registration response sent by the computing power network management center; the computing power registration response carries the third instruction; the third request may be a computing power sensing requirement or the like.

Step 302: receiving computing power data sent by the terminal in response to the first instruction.

The access management function may receive the computing power data forwarded by the radio access network; the interpretation of the computing power data may refer to the description of the foregoing method embodiment.

Step 303: sending the computing power data to the computing power network management center.

Specifically, the access management function may receive the computing power data forwarded by the radio access network; and send the computing power data to the computing power network management center.

In this embodiment of the present disclosure, the terminal may send the computing power data of the terminal to the radio access network or the access management function according to the first instruction; thus, the computing power network management center may obtain the computing power data of the terminal; further, the computing power usage of the terminal may be sensed and analyzed based on the computing power data.

In this embodiment of the present disclosure, the access management function may include an original access management function or a target access management function; wherein, the original access management function refers to the access management function accessed by the terminal before the location change; the target access management function refers to the access management function accessed by the terminal after the location change; the above process is applicable to both the original access management function and the target access management function.

For a scenario where the computing power network management center establishes communication with the radio access network, or a scenario where the computing power network management center establishes communication with a core network function, when it is determined that the location of the terminal changes, the original access management function (when the access management function does not change) or the target access management function (when the access management function changes) may send a sixth instruction to the computing power network management center; the sixth instruction is used to indicate that the location of the terminal has changed; and the sixth instruction carries a correspondence among the terminal, the radio access network, and the access management function; since the radio access network or the access management function may change, in this correspondence, the "radio access network" may include the original radio access network or the target radio access network; the "access management function" may include the original access management function or the target access management function.

Optionally, in a scenario where the computing power network management center establishes communication with a core network function, if the radio access network accessed by the terminal changes or does not change, and the access management function changes, the target access management function receives a seventh instruction sent by the computing power network management center; the seventh instruction is used to request the computing power data of the terminal; subsequently, the target access management function may perform processing according to the process of steps 301 to 303.

Optionally, in a scenario where the computing power network management center establishes communication with a core network function, after the terminal moves to a new radio access network and accesses the target access management function, the target access management function determines whether the terminal is a computing power node based on the "computing power node indication"; obtains a computing power sensing requirement from the original access management function of the terminal; and sends a computing power sensing request to the terminal based on the response; at this time, the target access management function may obtain a terminal location change notification subscribed by the computing power network management center from the original access management function; when it is determined that the terminal is a computing power node, the target access management function obtains the third instruction from the original access management function; sends an eighth instruction to the terminal according to the third instruction; the eighth instruction is used to request the computing power data of the terminal; and sends a ninth instruction to the computing power network management center; the ninth instruction is used to indicate that the access management function accessed by the terminal has changed.

By this way, the target access management function actively requests the computing power data and reports the computing power data to the computing power network management center; this can facilitate ensuring the continuity of obtaining computing power data by the computing power network management center when the location of the terminal changes.

As shown in FIG. 4, an embodiment of the present disclosure provides an information processing method applied to a computing power network management center; the method includes the following steps as shown in FIG. 4:
Step 401: sending a third instruction to the radio access network or the access management function; the third instruction is used to request the computing power data of the terminal.

The computing power network management center may send the third instruction to the radio access network by means of a computing power sensing requirement; the computing power network management center may send a third request to the access management function; the third request carries the third instruction; or, send a computing power registration response to the access management function; the computing power registration response carries the third instruction; the interpretation of the third instruction and the third request may refer to the description of the foregoing method embodiment.

Step 402: receiving the computing power data sent by the radio access network or the access management function in response to the third instruction.

Specifically, in this step, the computing power network management center may receive the computing power data in any of the following ways:
receiving the computing power data sent by the radio access network through a user plane channel; or
receiving a computing power report sent by the radio access network; the computing power report includes the computing power data; or
receiving the computing power data sent by the access management function; the computing power data is forwarded by the radio access network to the access management function.

After receiving the computing power report (or computing power report file), the computing power network management center parses the data therein; thereby realizing monitoring of the computing power node state and statistical analysis of the computing power usage data; supporting optimization of the computing power scheduling strategy of the computing power network management center; further, the statistical analysis data may be provided to a computing power trading module of the computing power network management center; assisting the computing power trading module in performing billing.

The computing power network management center receives the computing power data; parses the data; realizes monitoring of the computing power node state and statistical analysis of the computing power usage data; for example, statistical analysis of the computing power capability distribution and computing power mobility under the cell dimension; statistical analysis of the time period and computing power capability according to time priority; supporting optimization of the computing power scheduling strategy of the computing power network management center; further, the statistical analysis data may be provided to a computing power trading module of the computing power network management center; assisting the computing power trading module in performing billing; the specific computing power data statistical analysis and scheduling optimization methods are not specifically limited in this embodiment of the present disclosure.

In this embodiment of the present disclosure, the terminal may send the computing power data of the terminal to the radio access network or the access management function according to the first instruction; thus, the computing power network management center may obtain the computing power data of the terminal; further, the computing power usage of the terminal may be sensed and analyzed based on the computing power data.

Since the location of the terminal may change, to ensure the continuity of obtaining the computing power data by the computing power network management center, the computing power network management center may further subscribe to a terminal location change notification from the original access management function; wherein, the original access management function refers to the access management function accessed by the terminal before the location change.

In one case, for example, for a scenario where the computing power network management center establishes communication with the radio access network, or a scenario where the computing power network management center establishes communication with a core network function, when the location of the terminal changes, the computing power network management center receives a sixth instruction sent by the original access management function or the target access management function; the sixth instruction is used to indicate that the location of the terminal has changed; and the sixth instruction carries a correspondence among the terminal, the radio access network, and the access management function; wherein, the target access management function refers to the access management function accessed by the terminal after the location change; since the radio access network or the access management function may change, in this correspondence, the "radio access network" may include the original radio access network or the target radio access network; the "access management function" may include the original access management function or the target access management function.

Thereafter, if the terminal establishes a connection with the radio access network and the radio access network changes, the computing power network management center may interact with the target radio access network in the foregoing manner to obtain the computing power data of the terminal; if the terminal establishes a connection with the core network and the access management function changes, the computing power network management center may interact with the target access management function in the foregoing manner to obtain the computing power data of the terminal.

In one case, after the terminal moves, in a scenario where the computing power network management center passively receives the location change information of the terminal, continuity reporting of the computing power data is achieved; specifically, the computing power network management center receives a fifth instruction sent by the target radio access network; the fifth instruction is used to indicate that the radio access network accessed by the terminal has changed; and receives the computing power data of the terminal sent by the target radio access network; wherein, the target radio access network is the radio access network accessed by the terminal after the location change.

In one case, after the terminal moves, in a scenario where the computing power network management center passively receives the location change information of the terminal, continuity reporting of the computing power data is achieved; specifically, the computing power network management center receives a ninth instruction sent by the target access management function; the ninth instruction is used to indicate that the access management function accessed by the terminal has changed; and receives the computing power data of the terminal sent by the target access management function; wherein, the target access management function is the access management function accessed by the terminal after the location change.

In the scenario of fusion of the mobile communication network and the computing power network, when the terminal serves as a computing power node to provide external computing power services, reporting of computing power data is not supported; at this time, the computing power network management center cannot accurately and effectively sense the computing power state and computing power usage of the terminal; it is impossible to achieve statistical analysis of computing power usage, optimization of computing power scheduling strategies, and computing power usage billing; therefore, the method of this embodiment of the present disclosure is proposed; below, the specific implementation process of this embodiment of the present disclosure is described in detail in combination with different scenarios.

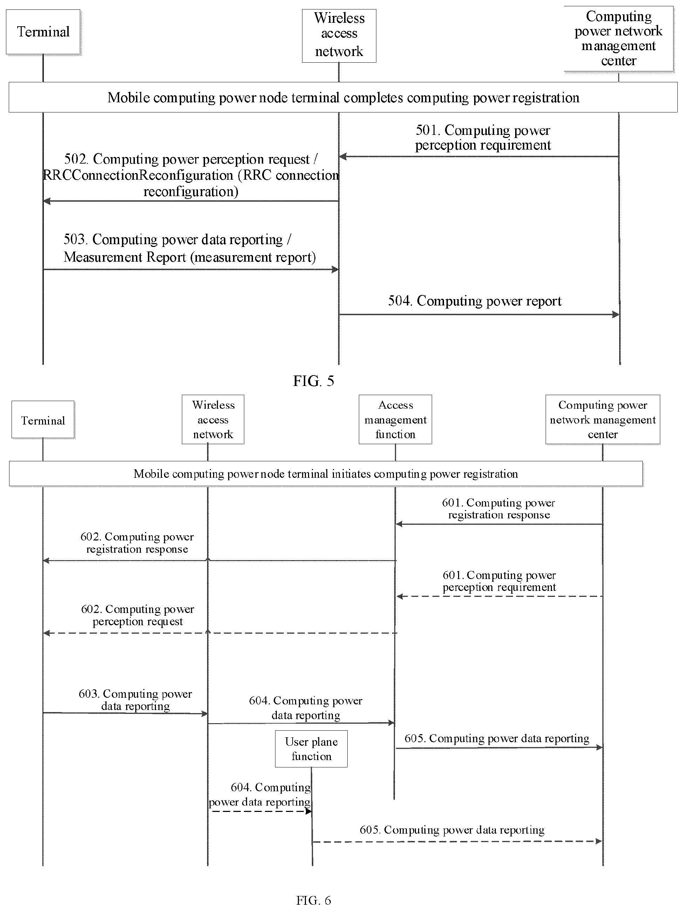

As shown in FIG. 5, in the embodiment shown in FIG. 5, under the scenario where the computing power network management center establishes communication with the radio access network (the computing power network management center is similar to an operations and maintenance center-radio (OMC-R)), computing power sensing and reporting of the terminal are realized; the process may include:
Step 501: the computing power network management center sends a computing power sensing requirement to the radio access network; triggering the radio access network to send a computing power sensing reporting request to the terminal.
wherein, the computing power sensing requirement carries one or more of the following parameters:
   a computing power node unique identifier or identifier list: a computing power node unique identifier of the terminal under the coverage of the radio access network that needs to report computing power data; the identifier is assigned by the computing power network management center when the computing power node is registered; and the identifier is unique within the computing power network management center; when it is necessary to sense the data of multiple computing power nodes, the identifier list is carried; when the identifier list is empty, by default, the data of all computing power nodes under the radio access network is reported;
   a device identifier or device identifier list: a terminal unique identifier or identifier list corresponding to the computing power node unique identifier or identifier list;
   a sensing resource type: a computing power resource that provides computing capability on the terminal, mainly referring to heterogeneous hardware resources such as a CPU, a GPU; or an application running on the terminal;
   a computing power reporting period: a reporting period in which the radio access network feeds back the computing power report to the computing power network management center (such as 15 minutes, 1 hour, 1 day, etc.); for a node with infrequent computing power changes, the reporting period can be set longer; the specific period can be set according to the actual computing power monitoring requirements in different scenarios.

Step 502: the radio access network sends a computing power sensing reporting request to the terminal.

Specifically, this step may have different implementations; for example, the radio access network directly sends a computing power data sensing request message to the terminal; or, the radio access network configures a measurement configuration parameter of the terminal via RRCConnectionReconfiguration over the air interface; wherein, the modified or newly added measurement parameters include one or more of the following:
a computing power measurement object: indicating a resource to be sensed; which is the same as the sensing resource type in the computing power sensing requirement; the computing power resource that provides computing capability on the terminal; mainly referring to heterogeneous hardware resources such as a CPU, a GPU; or an application running on the terminal;
a measurement interval: set when performing periodic measurement; setting the period for the terminal to perform measurement; the period is generally equal to the computing power reporting period in the computing power sensing requirement; when the timer expires or the computing power network management center requires no data reporting, measurement and reporting are stopped;
a computing power measurement triggering event: set when an event triggers measurement; adding an event type: a computing power measurement event ("computing power node indication" is "yes"); when the "computing power node indication" of the terminal is "yes", the measurement event is triggered to perform computing power data measurement and reporting; after the event is triggered, the terminal may also periodically measure and report data until the timer expires or the triggering condition becomes invalid; a scenario where the triggering condition becomes invalid is: after the terminal deregisters and is no longer a valid computing power node, the "computing power node indication" is "no".

Step 503: the terminal periodically measures computing power usage data according to the requirements in the computing power sensing reporting request or according to the requirements in the measurement configuration parameters; and reports the computing power data to the radio access network over the air interface or reports the computing power data to the radio access network via a MeasurementReport.

The computing power data mainly measured and reported by the terminal includes one or more of the following:
a current status of a resource: such as available, unavailable status, or normal, fault status, etc.; the value can be set according to the needs of the operator in the actual scenario;
a current used capacity of a resource: reporting the used capacity of the resource for heterogeneous hardware resources such as the CPU, the GPU;
a current available capacity of a resource: reporting the remaining available capacity of the resource for heterogeneous hardware resources such as the CPU, the GPU;
a current load of a resource: reporting the current load status of the application for an application-type resource.

Step 504: the radio access network receives the computing power data, forms a computing power report file, and forwards it to the computing power network management center.

The computing power network management center receives the computing power report file, parses the data in the report, performs monitoring of the computing power node status and statistical analysis of computing power usage data; for example, statistical analysis of the computing power capability distribution under the cell dimension, computing power mobility, etc.; for example, statistical analysis of the time period and computing power capacity provided according to time priority; supporting the computing power network management center to optimize the computing power scheduling strategy; further, the statistical analysis data can be provided to the computing power transaction module of the computing power network management center to assist the computing power transaction module in billing; the specific methods for statistical analysis of computing power data and scheduling optimization are not specifically limited in this embodiment of the present disclosure.

As shown in FIG. 6, in the embodiment shown in FIG. 6, under the scenario where the computing power network management center establishes communication with a core network function, sensing and reporting of the computing power data of the terminal are triggered via an NAS message; the process may include:
Step 601: the computing power network management center sends a computing power sensing requirement to the access management function.

Specifically, different implementation methods may be used:
(1) a computing power registration response: when the computing power node is registered, the computing power network management center feeds back a computing power registration response to the access management function; adding a computing power sensing reporting requirement for the computing power node in the response; or:
(2) a computing power sensing requirement: the computing power network management center sends a computing power sensing requirement to the access management function; carrying a computing power sensing reporting requirement for the computing power node (the prerequisite for this situation is that the terminal has completed the computing power registration).

The computing power sensing reporting requirement carried in the above two messages includes one or more of the following parameters:
a computing power node unique identifier or identifier list: a computing power node unique identifier of the terminal that needs to report computing power data; the identifier is assigned by the computing power network management center when the computing power node is registered; and the identifier is unique within the computing power network management center; when it is necessary to sense the data of multiple computing power nodes, the identifier list is carried;
a device identifier or device identifier list: a terminal unique identifier or identifier list corresponding to the computing power node unique identifier or identifier list;
a sensing resource type: a computing power resource that provides computing capability on the terminal; mainly referring to heterogeneous hardware resources such as the CPU, the GPU; or an application running on the terminal;
a computing power reporting period: a computing power sensing period for the terminal to report computing power data (such as 15 minutes; the specific period can be set according to the actual computing power monitoring requirements in different scenarios).

Step 602: the access management function sends a computing power sensing requirement to the terminal via NAS signaling; triggering the terminal to report computing power data; different implementation methods may be used:
(1) a computing power registration response: the access management function feeds back a computing power registration response to the terminal; the computing power registration response carries a computing power sensing reporting requirement;
(2) a computing power sensing request: the access management function forms a computing power sensing request and sends it to the terminal based on the computing power sensing requirement received from the computing power network management center; the request carries a computing power sensing reporting requirement.

The computing power sensing reporting requirement parameter mainly includes one or more of the following:
a computing power network management center unique identifier: indicating the information of the computing power network management center to which the computing power data needs to be reported, such as an identifier;
a sensing resource type: a computing power resource that provides computing capability on the terminal; mainly referring to heterogeneous hardware resources such as the CPU, the GPU; or an application running on the terminal;
a computing power reporting period: a computing power sensing period for the terminal to report computing power data (such as 15 minutes; the specific period can be set according to the actual computing power monitoring requirements in different scenarios).

Step 603: the terminal reports computing power data according to the requirement; wherein, the reported computing power data mainly includes:
a current status of a resource: such as available, unavailable status, or normal, fault status, etc.; the value can be set according to the needs of the operator in the actual scenario;
a current used capacity of a resource: reporting the used capacity of the resource for heterogeneous hardware resources such as the CPU, the GPU.
a current available capacity of a resource: reporting the remaining available capacity of the resource for heterogeneous hardware resources such as the CPU, the GPU;
a current load of a resource: reporting the current load status of the application for an application-type resource;
the terminal may report the computing power data in different implementations; one implementation is to report the computing power data to the radio access network, and the radio access network forwards the computing power data to the access management function via the signaling plane; another implementation is that the terminal establishes a session to the computing power network management center based on the unique identifier of the computing power network management center in the computing power sensing reporting requirement parameter, and the radio access network sends the computing power data to the computing power network management center via the user plane ; wherein, the specific process of session establishment and the process of the session management function selecting a user plane function are not specifically limited in the present disclosure;
Step 604: after receiving the computing power data, the radio access network forwards the data; this step may have different implementation methods:
   (1) the radio access network forwards the data to the access management function via a signaling message (such as an NAS message), and the access management function forwards the data to the computing power network management center;
   (2) the radio access network forwards the data to the user plane function via the user plane;
Step 605: the computing power network management center receives the computing power data;
the computing power network management center receives the computing power data, parses the data, performs monitoring of the computing power node status and statistical analysis of the computing power usage data; for example, statistical analysis of the computing power capability distribution under the cell dimension, computing power mobility, etc; for example, statistical analysis of the time period and computing power capacity provided according to time priority; supporting the computing power network management center to optimize the computing power scheduling strategy; further, the statistical analysis data may be provided to the computing power transaction module of the computing power network management center to assist the computing power transaction module in billing; the specific methods for statistical analysis of computing power data and scheduling optimization are not specifically limited in the present disclosure.

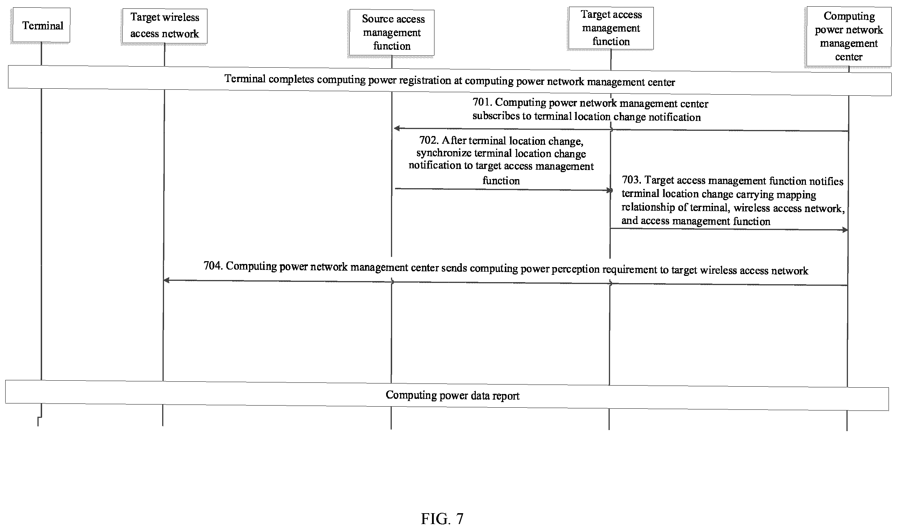

As shown in FIG. 7, in the embodiment shown in FIG. 7, under the scenario of terminal mobility, the computing power network management center proactively re-sends the computing power sensing requirement to achieve continuous reporting of the computing power data; wherein, in the scenario where the computing power network management center establishes communication with the radio access network, both the radio access network and the access management function accessed by the terminal change; the process may include:
the terminal completes registration in the computing power network management center, and the computing power network management center knows the relationship between the terminal and the access management function;
Step 701: the computing power network management center subscribes to the terminal' s location change notification in the original access management function;
Step 702: after the terminal location changes, the original access management function synchronizes the terminal' s location change notification to the target access management function;
Step 703: the target access management function sends a terminal location change notification to the computing power network management center according to the location subscription requirement; the notification carries the mapping relationship among the terminal, the access management function, and the radio access network;
Step 704: according to the content of the change notification, the computing power network management center re-sends the computing power sensing requirement to the target radio access network;
after receiving the computing power sensing requirement, the radio access network sends a computing power sensing request to the terminal or configures measurement parameters in an air interface RRC reconfiguration; after completion, the computing power data reporting process is performed; this process is the same as steps 502 to 504 in the first embodiment shown in FIG. 5.

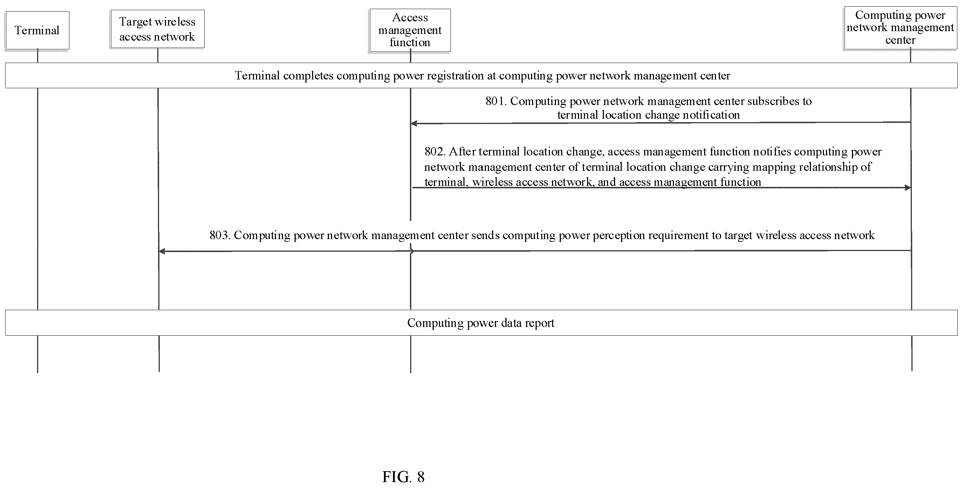

As shown in FIG. 8, in the embodiment shown in FIG. 8, under the scenario of terminal mobility, when the computing power network management center proactively re-sends the computing power sensing requirement, continuous reporting of the computing power data is achieved; wherein, in the scenario where the computing power network management center establishes communication with the radio access network, the radio access network accessed by the terminal changes, and the access management function remains unchanged; the process may include:
the terminal completes registration in the computing power network management center, and the computing power network management center knows the relationship between the terminal and the access management function;
Step 801: the computing power network management center subscribes to the terminal' s location change notification in the access management function;
Step 802: after the terminal location changes, the access management function sends a terminal location change notification to the computing power network management center according to the location subscription requirement ; the notification carries the mapping relationship among the terminal, the access management function, and the radio access network;
Step 803: according to the content of the change notification, the computing power network management center re-sends the computing power sensing requirement to the target radio access network;
after receiving the computing power sensing requirement, the radio access network sends a computing power sensing request to the terminal or configures measurement parameters in an air interface RRC reconfiguration; after completion, the computing power reporting process is performed; this process is the same as steps 502 to 504 in the first embodiment shown in FIG. 5.

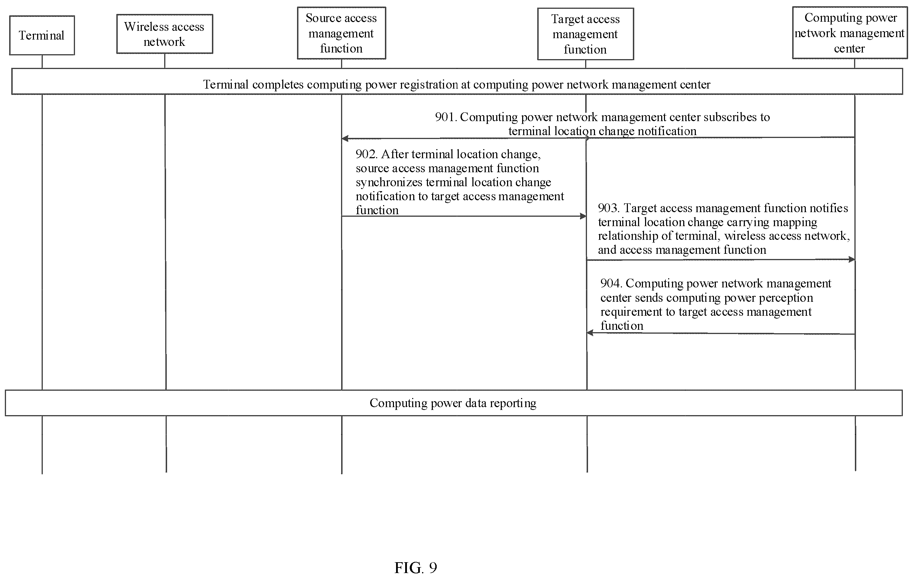

As shown in FIG. 9, in the embodiment shown in FIG. 9, under the scenario of terminal mobility, when the computing power network management center proactively re-sends the computing power sensing requirement, continuous reporting of the computing power data is achieved; wherein, in the scenario where the computing power network management center establishes communication with the core network function, the radio access network accessed by the terminal changes or remains unchanged, and the access management function changes;
the terminal completes registration in the computing power network management center, and the computing power network management center knows the relationship between the terminal and the access management function;
Step 901: the computing power network management center subscribes to the terminal' s location change notification in the access management function;
Step 902: after the terminal location changes, the original access management function synchronizes the terminal' s location change notification to the target access management function;
Step 903: the target access management function sends a terminal location change notification to the computing power network management center according to the location subscription requirement; the notification carries the mapping relationship among the terminal, the access management function, and the radio access network;
Step 904: the computing power network management center re-sends the computing power sensing requirement to the target access management function;
after receiving the computing power sensing requirement, the target access management function sends a computing power sensing request to the terminal; after completion, the subsequent computing power sensing reporting process is performed; this process is the same as steps 602 to 605 in the first embodiment shown in FIG. 6.

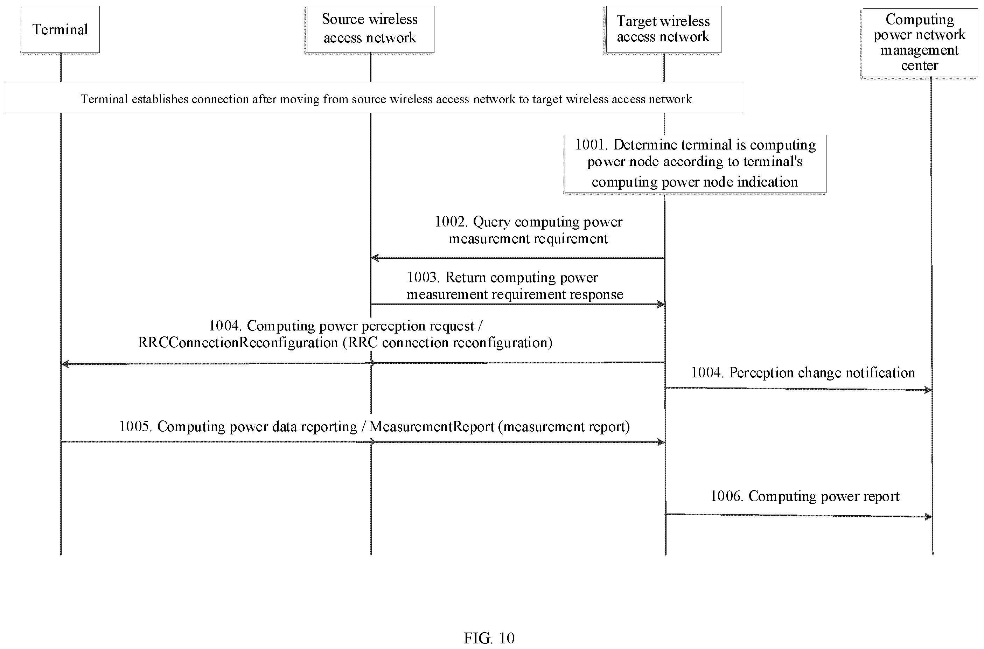

As shown in FIG. 10, in the embodiment shown in FIG. 10, under the scenario of terminal mobility, continuous reporting of the computing power data is achieved in the scenario where the computing power network management center passively receives the terminal location change information; wherein, in the scenario where the computing power network management center establishes communication with the radio access network, after the terminal moves to the target radio access network, the target radio access network determines that the terminal is a computing power node through a "computing power node indication", and obtains the measurement configuration information related to the computing power MR from the original radio access network of the terminal, and reconfigures the measurement requirement based on the response; the process may include:
Step 1001: after the terminal moves to the target radio access network, the target radio access network determines that the terminal is a computing power node through a "computing power node indication" ;
Step 1002: the target radio access network queries the original radio access network of the terminal for the computing power measurement requirement;
Step 1003: the original radio access network feeds back a computing power measurement requirement response to the target radio access network; the specific parameters included are the same as the information parameters carried in the computing power sensing requirement in the embodiment shown in FIG. 5;
Step 1004: after receiving the response, the target radio access network performs the following operations.
sending a computing power sensing request via an air interface, or configuring the computing power measurement reporting (MR) measurement requirement of the terminal; the configuration parameters are as explained in step 502 of the embodiment shown in FIG. 5.
feeding back a radio access network change notification to the computing power network management center; after the notification, the target radio access network reports the computing power usage data of the terminal to the computing power network management center.

Step 1005: the terminal measures the computing power usage data periodically according to the measurement configuration, and reports the computing power data via the air interface, or reports the computing power data to the target radio access network via a MeasurementReport; the measured and reported data of the terminal are the same as those explained in step 503 of the embodiment shown in FIG. 5.

Step 1006: the target radio access network receives the computing power data, forms a computing power report file, and forwards it to the computing power network management center.

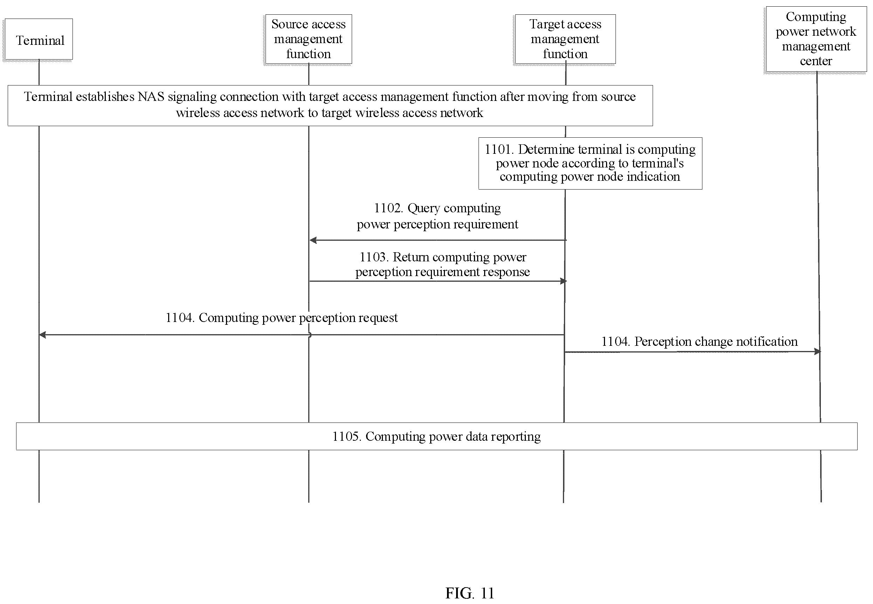

As shown in FIG. 11, in the embodiment shown in FIG. 11, in a scenario where the terminal moves, the computing power network management center passively receives computing power data under a scenario where terminal location change information is received passively, ensuring continuity of computing power data reporting; in this scenario, where the computing power network management center communicates with a core network function, after the terminal moves to a new radio access network and accesses the target access management function, the target access management function determines that the terminal is a computing power node based on the "computing power node indication" , queries the original access management function of the terminal for the computing power sensing request, and sends a computing power sensing request to the terminal according to the response; the process may include.

Step 1101: after the terminal accesses the target access management function, the target access management function determines that the terminal is a computing power node based on the "computing power node indication" .

Step 1102: the target access management function queries the original access management function of the terminal for the computing power sensing request.

Step 1103: the original access management function feeds back the computing power sensing request response to the target access management function; the carried specific parameters are the same as the parameters carried in the computing power sensing reporting request information in step 601 of the embodiment shown in FIG. 6.

Step 1104: after receiving the response, the target access management function performs the following operations.

sending a computing power sensing request to the terminal; the configuration parameters are the same as the computing power sensing reporting request parameters in step 602 of the embodiment shown in FIG. 6.

feeding back an access management function change notification to the computing power network management center; after the notification, the target access management function reports the computing power usage data of the terminal to the computing power network management center.

Step 1105: the terminal reports the computing power data to the computing power network management center according to the request; same as steps 603 to 605 of the embodiment shown in FIG. 6.

Through the above embodiments, it can be seen that by using the solution provided by the present disclosure, the computing power network management center can accurately and effectively sense the computing power status and computing power usage of the terminal, thereby enabling monitoring of the terminal' s status based on the sensed computing power data, realizing statistical analysis of computing power usage, supporting the computing power network management center to perform better and more reasonable computing power resource scheduling and scheduling strategy optimization, and providing a basis for computing power usage billing.

The technical solution provided in the embodiments of the present disclosure can be applied to various systems, especially the fifth generation mobile communication technology (5th Generation Mobile Communication Technology, 5G) system; for example, applicable systems may include Global System of Mobile Communication (GSM) systems, Code Division Multiple Access (CDMA) systems, Wideband Code Division Multiple Access (WCDMA) General Packet Radio Service (GPRS) systems, Long Term Evolution (LTE) systems, LTE Frequency Division Duplex (FDD) systems, LTE Time Division Duplex (TDD) systems, Long Term Evolution Advanced (LTE-A) systems, Universal Mobile Telecommunication System (UMTS), Worldwide Interoperability for Microwave Access (WiMAX) systems, 5G New Radio (NR) systems, etc.; these systems include terminal devices and network devices; the system may also include a core network part, such as an Evolved Packet System (EPS), 5G System (5GS), etc.

The terminal device involved in the embodiments of the present disclosure may refer to a device that provides voice and/or data connectivity to a user, such as a handheld device with wireless connectivity function or other processing devices connected to a wireless modem; the name of the terminal device may be different in different systems; for example, in a 5G system, the terminal device may be referred to as user equipment (User Equipment, UE); a wireless terminal device may communicate with one or more core networks (Core Network, CN) via a radio access network (Radio Access Network, RAN); the wireless terminal device may be a terminal device, such as a mobile phone (also called a "cellular" phone) and a computer with a terminal device, for example, it may be a portable, pocket-sized, handheld, built-in computer or vehicle-mounted mobile device that exchanges voice and/or data with the radio access network; for example, a Personal Communication Service (PCS) phone, a cordless phone, a Session Initiated Protocol (SIP) phone, a Wireless Local Loop (WLL) station, a Personal Digital Assistant (PDA), etc.; the wireless terminal device may also be referred to as a system, subscriber unit, subscriber station, Mobile Station, Mobile, Remote Station, Access Point, Remote Terminal, Access Terminal, User Terminal, User Agent, User Device; the embodiments of the present disclosure do not limit the terminology.

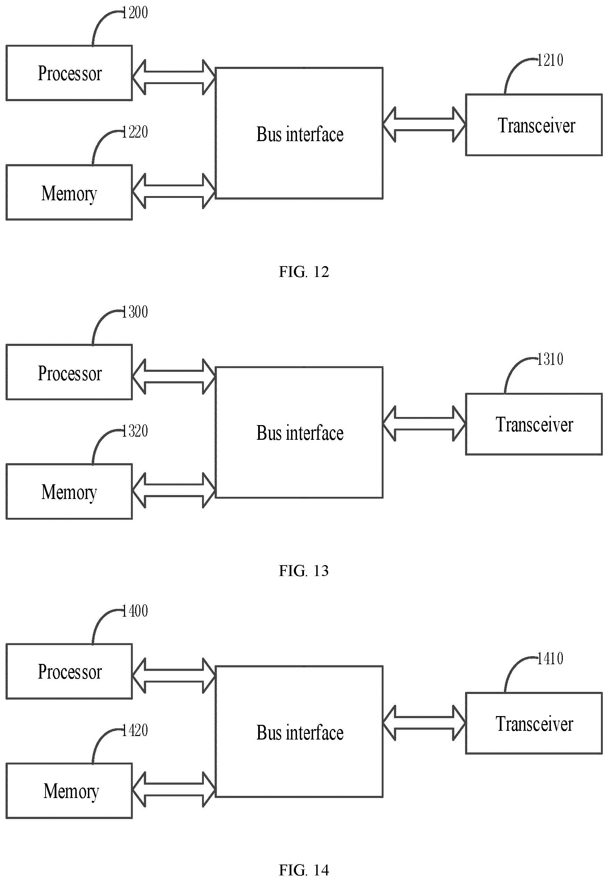

As shown in FIG. 12, the information processing device provided in the embodiments of the present disclosure is applied to a radio access network, and includes: a processor 1200, configured to read a program in a memory 1220 and execute the following processes:
sending a first indication to a terminal.
receiving computing power data sent by the terminal in response to the first indication.
sending the computing power data to a computing power network management center.
a transceiver 1210, configured to receive and send data under the control of the processor 1200.

In FIG. 12, the bus architecture may include any number of interconnected buses and bridges that connect various circuits represented by one or more processors represented by the processor 1200 and the memory represented by the memory 1220; the bus architecture may also connect various other circuits such as peripherals, voltage regulators and power management circuits, all of which are well known in the art and thus are not further described herein; the bus interface provides an interface; the transceiver 1210 may be composed of multiple components, that is, including a transmitter and a receiver, providing a unit for communicating with various other devices over a transmission medium; the processor 1200 is responsible for managing the bus architecture and general processing; the memory 1220 may store data used by the processor 1200 when performing operations.

The processor 1200 may be a Central Processing Unit (CPU), an Application Specific Integrated Circuit (ASIC), a Field-Programmable Gate Array (FPGA) or a Complex Programmable Logic Device (CPLD); the processor may also adopt a multi-core architecture.

The processor 1200 is responsible for managing the bus architecture and general processing; the memory 1220 may store data used by the processor 1200 when performing operations.

The processor 1200 is further configured to read a program and execute the following steps:
receiving a third indication sent by the computing power network management center; the third indication is used to indicate a request for computing power data of the terminal.

The processor 1200 is further configured to read a program and execute the following steps:
sending a first measurement configuration parameter to the terminal; the first measurement configuration parameter is used to represent the first indication; or
sending a first request to the terminal; the first request carries the first indication.

The processor 1200 is further configured to read a program and execute the following steps:
receiving computing power data sent by the terminal via an air interface message or a MeasurementReport.

The processor 1200 is further configured to read a program and execute the following steps:
forwarding the computing power data to an access management function so that the access management function sends the computing power data to the computing power network management center; or
sending the computing power data to the computing power network management center via a user plane channel; or
sending a computing power report to the computing power network management center; the computing power report includes the computing power data.

The radio access network includes a target radio access network; the target radio access network is a radio access network accessed by the terminal after a location change; the processor 1200 is further configured to read a program and execute the following steps:
under the condition of determining that the terminal is a computing power node, obtaining a third indication from an original radio access network; the original radio access network is a radio access network accessed by the terminal before the location change.
sending a fourth indication or a second measurement configuration parameter to the terminal according to the third indication; the second measurement configuration parameter is used to represent the fourth indication; the fourth indication is used to request the terminal to send computing power data.
sending a fifth indication to the computing power network management center; the fifth indication is used to indicate that the radio access network accessed by the terminal has changed.

The interpretations of the first indication, the third indication, the first measurement configuration parameter, the second measurement configuration parameter, and the computing power data can refer to the descriptions of the foregoing embodiments.

It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again.

As shown in FIG. 13, an information processing device provided in the embodiment of the present disclosure is applied to an access management function and includes: a processor 1300, configured to read a program in a memory 1320 and perform the following process:
sending a first indication to a terminal;
receiving, from the terminal, computing power data sent in response to the first indication;
sending the computing power data to a computing power network management center.

A transceiver 1310, configured to receive and transmit data under control of the processor 1300.

In FIG. 13, the bus architecture may include any number of interconnected buses and bridges, in which various circuits represented by one or more processors represented by the processor 1300 and a memory represented by the memory 1320 are linked together; the bus architecture may also link various other circuits such as peripherals, voltage regulators, and power management circuits, which are known in the art and will not be further described herein; a bus interface provides an interface; the transceiver 1310 may include multiple components, i.e., including a transmitter and a receiver, providing a unit for communicating with various other devices over a transmission medium; the processor 1300 is configured to manage the bus architecture and perform normal processing, and the memory 1320 may store data used by the processor 1300 when performing operations.

The processor 1300 may be a Central Processing Unit (CPU), an Application Specific Integrated Circuit (ASIC), a Field-Programmable Gate Array (FPGA), or a Complex Programmable Logic Device (CPLD); the processor may also adopt a multi-core architecture.

The processor 1300 is configured to manage the bus architecture and perform normal processing, and the memory 1320 may store data used by the processor 1300 when performing operations.

The processor 1300 is further configured to read a program and perform the following steps:
receiving a third indication sent by the computing power network management center, the third indication being used for indicating a request for computing power data of the terminal.

The processor 1300 is further configured to read a program and perform the following steps:
sending a computing power registration response to the terminal, the computing power registration response carrying the first indication; or
sending a second request to the terminal, the second request carrying the first indication.

The processor 1300 is further configured to read a program and perform the following steps:
receiving a third request sent by the computing power network management center, the third request carrying the third indication; or
receiving a computing power registration response sent by the computing power network management center, the computing power registration response carrying the third indication.

The processor 1300 is further configured to read a program and perform the following steps:
receiving computing power data forwarded by a radio access network;
sending the computing power data to the computing power network management center.

The access management function includes an original access management function or a target access management function; the processor 1300 is further configured to read a program and perform the following steps:
sending a sixth indication to the computing power network management center, when it is determined that the location of the terminal has changed, the sixth indication being used for indicating that the location of the terminal has changed and carrying a correspondence relationship among the terminal, the radio access network, and the access management function;
wherein the original access management function is an access management function accessed by the terminal before the location change, and the target access management function is an access management function accessed by the terminal after the location change.

The access management function includes the target access management function; the processor 1300 is further configured to read a program and perform the following steps:
receiving a seventh indication sent by the computing power network management center, the seventh indication being used for requesting computing power data of the terminal.

The access management function includes the target access management function; the processor 1300 is further configured to read a program and perform the following steps:
acquiring a location change notification subscribed by the computing power network management center for the terminal from the original access management function.

The access management function includes the target access management function; the processor 1300 is further configured to read a program and perform the following steps:
sending, by the target access management function, an eighth indication to the terminal according to a third indication acquired from the original access management function, the eighth indication being used for requesting computing power data of the terminal, and sending a ninth indication to the computing power network management center, the ninth indication being used for indicating that the access management function accessed by the terminal has changed.
acquiring, when it is determined that the terminal is a computing power node, a third indication from an original access management function, and sending an eighth indication to the terminal according to the third indication, the eighth indication being used for requesting computing power data of the terminal;
sending a ninth indication to a computing power network management center, the ninth indication being used for indicating that an access management function accessed by the terminal has changed.
wherein an interpretation of the first indication, the third indication, the first measurement configuration parameter, and the computing power data can refer to a description in the foregoing embodiments.

It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again.

As shown in FIG. 14, an information processing device provided in the embodiment of the present disclosure is applied to an access management function and includes: a processor 1400, configured to read a program in a memory 1420 and perform the following process:
sending a third indication to a radio access network or an access management function, the third indication being used for requesting computing power data of a terminal;
receiving, from the radio access network or the access management function, computing power data sent in response to the third indication.

A transceiver 1410, configured to receive and transmit data under control of the processor 1400.

In FIG. 14, the bus architecture may include any number of interconnected buses and bridges, in which various circuits represented by one or more processors represented by the processor 1400 and a memory represented by the memory 1420 are linked together; the bus architecture may also link various other circuits such as peripherals, voltage regulators, and power management circuits, which are known in the art and will not be further described herein; a bus interface provides an interface; the transceiver 1410 may include multiple components, i.e., including a transmitter and a receiver, providing a unit for communicating with various other devices over a transmission medium; the processor 1400 is configured to manage the bus architecture and perform normal processing, and the memory 1420 may store data used by the processor 1400 when performing operations.

The processor 1400 may be a Central Processing Unit (CPU), an Application Specific Integrated Circuit (ASIC), a Field-Programmable Gate Array (FPGA), or a Complex Programmable Logic Device (CPLD); the processor may also adopt a multi-core architecture.

The processor 1400 is configured to manage the bus architecture and perform normal processing, and the memory 1420 may store data used by the processor 1400 when performing operations.

The processor 1400 is further configured to read a program and perform the following steps:
sending a third request to an access management function, the third request carrying the third indication; or
sending a computing power registration response to the access management function, the computing power registration response carrying the third indication.

The processor 1400 is further configured to read a program and perform the following steps:
receiving computing power data sent by a radio access network through a user plane channel; or
receiving a computing power report sent by the radio access network, the computing power report including the computing power data; or
receiving computing power data sent by an access management function, the computing power data being forwarded by the radio access network to the access management function.

The processor 1400 is further configured to read a program and perform the following steps:
subscribing to a location change notification of the terminal from an original access management function;
wherein the original access management function is an access management function accessed by the terminal before a location change.

The processor 1400 is further configured to read a program and perform the following steps:
receiving, when a location of the terminal has changed, a sixth indication sent by the original access management function or a target access management function, the sixth indication being used for indicating that the location of the terminal has changed and carrying a correspondence relationship among the terminal, the radio access network, and the access management function;
wherein the target access management function is an access management function accessed by the terminal after the location change.

The processor 1400 is further configured to read a program and perform the following steps:
receiving a fifth indication sent by a target radio access network, the fifth indication being used for indicating that the radio access network accessed by the terminal has changed;
receiving computing power data sent by the target radio access network;
wherein the target radio access network is a radio access network accessed by the terminal after the location change.

The processor 1400 is further configured to read a program and perform the following steps:
receiving a ninth indication sent by a target access management function, the ninth indication being used for indicating that the access management function accessed by the terminal has changed;
receiving computing power data sent by the target access management function.
wherein the target access management function is an access management function accessed by the terminal after the location change;
wherein an interpretation of the first indication, the third indication, and the computing power data can refer to a description in the foregoing embodiments;

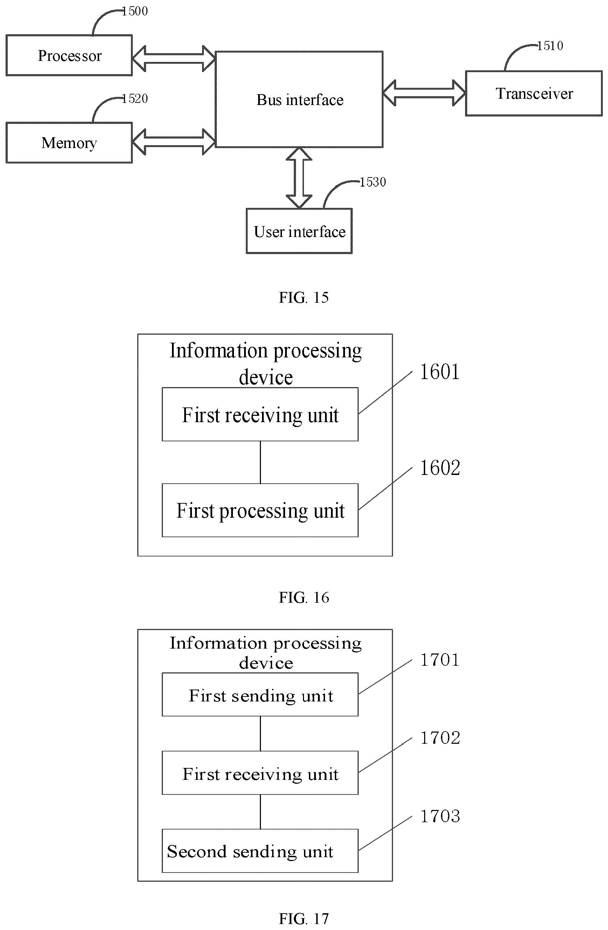

It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again;
As shown in FIG. 15, an information processing device provided in the embodiment of the present disclosure is applied to a terminal and includes: a processor 1500, configured to read a program in a memory 1520 and perform the following process:
receiving a first indication sent by a radio access network or an access management function;
sending, in response to the first indication, computing power data of the terminal to a computing power network management center via the radio access network or the access management function;
a transceiver 1510, configured to receive and transmit data under control of the processor 1500.

In FIG. 15, the bus architecture may include any number of interconnected buses and bridges, in which various circuits represented by one or more processors represented by the processor 1500 and a memory represented by the memory 1520 are linked together; the bus architecture may also link various other circuits such as peripherals, voltage regulators, and power management circuits, which are known in the art and will not be further described herein; a bus interface provides an interface; the transceiver 1510 may include multiple components, i.e., including a transmitter and a receiver, providing a unit for communicating with various other devices over a transmission medium; for different user devices, a user interface 1530 may also be an interface capable of externally or internally connecting required devices, and the connected devices include but are not limited to a keypad, a display, a speaker, a microphone, a joystick, etc.;
the processor 1500 is configured to manage the bus architecture and perform normal processing, and the memory 1520 may store data used by the processor 1500 when performing operations;
the processor 1500 may be a Central Processing Unit (CPU), an Application Specific Integrated Circuit (ASIC), a Field-Programmable Gate Array (FPGA), or a Complex Programmable Logic Device (CPLD); the processor may also adopt a multi-core architecture;
the processor is configured to perform any method provided in the embodiment of the present disclosure by calling a computer program stored in the memory according to obtained executable instructions; the processor and the memory may also be physically arranged separately;
the processor 1500 is further configured to read a program and perform the following steps:
   receiving a first measurement configuration parameter sent by the radio access network, the first measurement configuration parameter being used for indicating the first indication; or
   receiving a first request sent by the radio access network, the first request carrying the first indication;
   the processor 1500 is further configured to read a program and perform the following steps:
      receiving a computing power registration response sent by the access management function, the computing power registration response carrying the first indication; or
      receiving a second request sent by the access management function, the second request carrying the first indication;
      the processor 1500 is further configured to read a program and perform the following steps:
         sending computing power data to the radio access network, the computing power data being used for sending the computing power data to the computing power network management center via the radio access network; or
         sending computing power data to the radio access network, the computing power data being used for sending the computing power data to the computing power network management center via the radio access network and the access management function; or
         sending computing power data to the radio access network, the computing power data being used for sending the computing power data to the computing power network management center via the user plane channel of the radio access network;
         the processor 1500 is further configured to read a program and perform the following steps:
            sending a second indication to a target radio access network or a target access management function when a location of the terminal has changed, the second indication being used for indicating that the terminal is a computing power node;
            wherein the target radio access network is a radio access network accessed by the terminal after the location change, and the target access management function is an access management function accessed by the terminal after the location change;
            wherein an interpretation of the first indication, the second indication, and the computing power data can refer to a description in the foregoing embodiments;

It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again;
As shown in FIG. 16, an information processing device provided in the embodiment of the present disclosure is applied to a terminal and includes:
a first receiving unit 1601, configured to receive a first indication sent by a radio access network or an access management function; a first processing unit 1602, configured to send, in response to the first indication, computing power data of the terminal to a computing power network management center via the radio access network or the access management function.

Optionally: a first receiving unit, configured to receive a first measurement configuration parameter sent by a radio access network, the first measurement configuration parameter being used for indicating a first indication; or to receive a first request sent by the radio access network, the first request carrying the first indication;
Optionally: the first receiving unit, configured to receive a computing power registration response sent by an access management function, the computing power registration response carrying the first indication; or to receive a second request sent by the access management function, the second request carrying the first indication;
Optionally: a first processing unit, configured to:
   send computing power data to the radio access network, the computing power data being used for sending the computing power data to a computing power network management center via the radio access network; or
   send computing power data to the radio access network, the computing power data being used for sending the computing power data to the computing power network management center via the radio access network and the access management function; or
   send computing power data to the radio access network, the computing power data being used for sending the computing power data to the computing power network management center via a user plane channel of the radio access network;
   Optionally: the device further includes:
      a first sending unit, configured to send a second indication to a target radio access network or a target access management function when a location of the terminal has changed, the second indication being used for indicating that the terminal is a computing power node;
      wherein the target radio access network is a radio access network accessed by the terminal after the location change, and the target access management function is an access management function accessed by the terminal after the location change;
      wherein an interpretation of the first indication, the second indication, and the computing power data can refer to a description in the foregoing method embodiments;
      It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again.

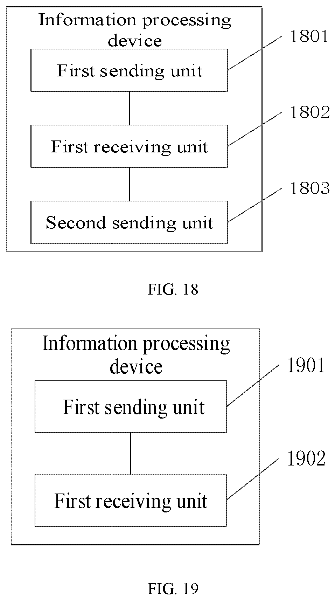

As shown in FIG. 17, an information processing device provided in the embodiment of the present disclosure is applied to a radio access network and includes:
a first sending unit 1701, configured to send a first indication to a terminal; a first receiving unit 1702, configured to receive computing power data sent by the terminal in response to the first indication; a second sending unit 1703, configured to send the computing power data to a computing power network management center;
Optionally, the device further includes:
   a second receiving unit, configured to receive a third indication sent by the computing power network management center, the third indication being used for requesting computing power data of the terminal;
   Optionally, the first sending unit, configured to send a first measurement configuration parameter to the terminal, the first measurement configuration parameter being used for indicating the first indication; or to send a first request to the terminal, the first request carrying the first indication;
   Optionally, the first receiving unit, configured to receive computing power data sent by the terminal via an air interface message or a measurement report;
   Optionally, the second sending unit, configured to:
      forward the computing power data to an access management function for sending the computing power data to the computing power network management center by the access management function; or
      send the computing power data to the computing power network management center via a user plane channel; or
      send a computing power report to the computing power network management center, the computing power report including the computing power data;
      the radio access network includes a target radio access network, wherein the target radio access network is a radio access network accessed by the terminal after the location change; optionally: the device further includes:
         a first acquisition unit, configured to acquire a third indication from an original radio access network under a condition that the terminal is determined as a computing power node, the original radio access network being a radio access network accessed by the terminal before the location change;
         a third sending unit, configured to send a fourth indication or a second measurement configuration parameter to the terminal according to the third indication, the second measurement configuration parameter being used for indicating the fourth indication, the fourth indication being used for requesting computing power data of the terminal;
         a fourth sending unit, configured to send a fifth indication to the computing power network management center, the fifth indication being used for indicating that a radio access network accessed by the terminal has changed;
         wherein an interpretation of the first indication, the third indication, the first measurement configuration parameter, and the second measurement configuration parameter can refer to a description in the foregoing method embodiments;
         It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again;
         As shown in FIG. 18, an information processing device provided in the embodiment of the present disclosure is applied to an access management function and includes:
            A first sending unit 1801, configured to send a first indication to a terminal; a first receiving unit 1802, configured to receive computing power data sent by the terminal in response to the first indication; a second sending unit 1803, configured to send the computing power data to a computing power network management center.

Optionally, the device further includes:
a second receiving unit, configured to receive a third indication sent by the computing power network management center, the third indication being used for requesting computing power data of the terminal.

Optionally, the first sending unit, configured to send a computing power registration response to the terminal, the computing power registration response carrying the first indication; or to send a second request to the terminal, the second request carrying the first indication.

Optionally, the first receiving unit, configured to receive a third request sent by the computing power network management center, the third request carrying the third indication; or to receive a computing power registration response sent by the computing power network management center, the computing power registration response carrying the third indication.

Optionally, the second receiving unit, configured to receive a third request sent by the computing power network management center, the third request carrying the third indication; or to receive a computing power registration response sent by the computing power network management center, the computing power registration response carrying the third indication.

Optionally, the access management function includes an original access management function or a target access management function; the device further includes:
a third sending unit, configured to send a sixth indication to the computing power network management center under a condition that a location of the terminal has changed, the sixth indication being used for indicating that the location of the terminal has changed, and the sixth indication carrying a correspondence relationship among the terminal, a radio access network, and an access management function;
wherein the original access management function is an access management function accessed by the terminal before the location change, and the target access management function is an access management function accessed by the terminal after the location change.

Optionally, the access management function includes a target access management function; the device further includes: a third receiving unit, configured to receive a seventh indication sent by the computing power network management center, the seventh indication being used for requesting computing power data of the terminal.

Optionally, the access management function includes a target access management function; the device further includes: a second acquisition unit, configured to acquire a terminal location change notification subscribed by the computing power network management center from the original access management function.

Optionally, the access management function includes a target access management function; the device further includes:
a third acquisition unit, configured to acquire a third indication from the original access management function under a condition that the terminal is determined as a computing power node, and to send an eighth indication to the terminal according to the third indication, the eighth indication being used for requesting computing power data of the terminal;
a fourth sending unit, configured to send a ninth indication to the computing power network management center, the ninth indication being used for indicating that an access management function accessed by the terminal has changed.

Wherein an interpretation of the first indication, the third indication, and the like can refer to a description in the foregoing embodiments.

It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again.

As shown in FIG. 19, an information processing device provided in the embodiment of the present disclosure is applied to a computing power network management center and includes:
a first sending unit 1901, configured to send a third indication to a radio access network or an access management function, the third indication being used for requesting computing power data of the terminal; a first receiving unit 1902, configured to receive computing power data sent by the radio access network or the access management function in response to the third indication.

Optionally, the first sending unit, configured to send a third request to the access management function, the third request carrying the third indication; or to send a computing power registration response to the access management function, the computing power registration response carrying the third indication.

Optionally, the first receiving unit, configured to:
receive computing power data sent by the radio access network via a user plane channel; or
receive a computing power report sent by the radio access network, the computing power report including the computing power data; or
receive computing power data sent by the access management function, the computing power data being forwarded to the access management function by the radio access network.

Optionally, the device further includes:
a second sending unit, configured to subscribe to a terminal location change notification from the original access management function;

Wherein the original access management function is an access management function accessed by the terminal before the location change.

Optionally, the device further includes:
a second receiving unit, configured to receive a sixth indication sent by the original access management function or the target access management function under a condition that a location of the terminal has changed, the sixth indication being used for indicating that the location of the terminal has changed, and the sixth indication carrying a correspondence relationship among the terminal, the radio access network, and the access management function.

Wherein the target access management function is an access management function accessed by the terminal after the location change.

Optionally, the device further includes:
a third receiving unit, configured to receive a fifth indication sent by the target radio access network, the fifth indication being used for indicating that a radio access network accessed by the terminal has changed;
a fourth receiving unit, configured to receive computing power data of the terminal sent by the target radio access network;
wherein the target radio access network is a radio access network accessed by the terminal after the location change.

Optionally, the device further includes:
a fifth receiving unit, configured to receive a ninth indication sent by the target access management function, the ninth indication being used for indicating that an access management function accessed by the terminal has changed;
a sixth receiving unit, configured to receive computing power data of the terminal sent by the target access management function;
wherein the target access management function is an access management function accessed by the terminal after the location change.
Wherein an interpretation of the first indication, the third indication, and the like can refer to a description in the foregoing method embodiments.

It should be noted that the above-described device provided in the embodiment of the present disclosure is configured to implement all the method steps realized by the above-described method embodiment and is capable of achieving the same technical effects; therefore, the parts identical to those of the method embodiment and the beneficial effects are not described herein again.

It should be noted that the division of units in the present embodiment of the disclosure is illustrative and merely a logical functional division, and an alternative division mode may be adopted in an actual implementation. In addition, each functional unit in each embodiment of the present disclosure may be integrated into one processing unit, or each unit may physically exist separately, or two or more units may be integrated into one unit. The integrated unit may be implemented in the form of hardware or in the form of a software functional unit.

When the integrated unit is implemented as a software functional unit and sold or used as an independent product, the unit may be stored in a processor-readable storage medium. Based on such an understanding, the technical solution of the present disclosure essentially or partially contributing to the related art can be embodied in the form of a software product, which is stored in a storage medium and includes several instructions to enable a computer device (which may be a personal computer, a server, or a network device) or a processor to execute all or part of the steps of the method according to each embodiment of the present disclosure. The aforementioned storage medium includes: USB flash drives, mobile hard disks, Read-Only Memory (ROM), Random Access Memory (RAM), magnetic disks, optical disks, and other media capable of storing program codes.

The embodiment of the present disclosure further provides a processor-readable storage medium, in which a program is stored, and when executed by a processor, the program implements each process of the above information processing method embodiments and is capable of achieving the same technical effects; to avoid repetition, descriptions are omitted herein. Wherein the readable storage medium may be any available medium or data storage device accessible by the processor, including but not limited to magnetic storage devices (such as floppy disks, hard disks, magnetic tapes, Magneto-Optical discs), optical storage devices (such as Compact Discs, Digital Video Discs, Blu-ray Discs, High-Definition Versatile Discs), and semiconductor storage devices (such as ROM, Erasable Programmable Read-Only Memory (EPROM), Electrically Erasable Programmable Read-Only Memory (EEPROM), non-volatile memory (NAND FLASH), Solid State Disks (SSD)), etc.

It should be noted that, in this disclosure, the terms "comprising," "including," or any other variations thereof are intended to cover a non-exclusive inclusion so that a process, method, article, or device that comprises a list of elements not only includes those elements but may also include other elements not expressly listed, or may further include elements inherent to such process, method, article, or device. Without further limitation, an element defined by the phrase "comprising a..." does not exclude the existence of other identical elements in the process, method, article, or device that comprises the element.

Through the description of the above embodiments, those skilled in the art can clearly understand that the method described in the above embodiments can be implemented by means of software in conjunction with necessary general hardware platforms and, of course, can also be implemented by hardware alone, but in many cases the former is preferable. Based on such an understanding, the technical solution of the present disclosure essentially or partially contributing to the related art can be embodied in the form of a software product, which is stored in a storage medium (such as a ROM, RAM, disk, or optical disc) and includes several instructions to enable a terminal (which may be a mobile phone, computer, server, air conditioner, or network device) to execute the method described in each embodiment of the present disclosure.

The above embodiments of the present disclosure are described with reference to the accompanying drawings, but the present disclosure is not limited to the above specific embodiments. The above specific embodiments are merely illustrative, not restrictive. Those of ordinary skill in the art may make many modifications in various forms without departing from the spirit and scope of the present disclosure and claims, and all such modifications shall fall within the protection scope of the present disclosure.

## Claims

1. An information processing method applied to a terminal, comprising:
receiving a first instruction transmitted by a radio access network or an access management function; and
in response to the first instruction, transmitting computing power data of the terminal to a computing power network management center via the radio access network or the access management function.

2. The information processing method according to claim 1, wherein the receiving the first instruction transmitted by the radio access network comprises:
receiving a first measurement configuration parameter transmitted by the radio access network, wherein the first measurement configuration parameter indicates the first instruction; or
receiving a first request transmitted by the radio access network, wherein the first request carries the first instruction.

3. The information processing method according to claim 1, wherein the receiving the first instruction transmitted by the access management function comprises:
receiving a computing power registration response transmitted by the access management function, wherein the computing power registration response carries the first instruction; or
receiving a second request transmitted by the access management function, wherein the second request carries the first instruction.

4. The information processing method according to claim 3, wherein the first instruction is configured to indicate at least one of the following:
a unique identifier of the computing power network management center;
a perception resource type;
a computing power reporting period.

5. The information processing method according to claim 1, wherein the transmitting the computing power data of the terminal to the computing power network management center via the radio access network or the access management function in response to the first instruction comprises:
transmitting the computing power data to the radio access network, wherein the computing power data is configured to be transmitted to the computing power network management center via the radio access network; or
transmitting the computing power data to the radio access network, wherein the computing power data is configured to be transmitted to the computing power network management center via the radio access network and the access management function; or
transmitting the computing power data to the radio access network, wherein the computing power data is configured to be transmitted to the computing power network management center via a user plane of the radio access network.

6. The information processing method according to any one of claims 1 to 5, wherein the computing power data comprises at least one of the following:
a current status of a resource;
a current used capacity of a resource;
a current available capacity of a resource;
a current load of a resource.

7. The information processing method according to claim 1, further comprising:
when a location of the terminal changes, transmitting a second instruction to a target radio access network or a target access management function, wherein the second instruction is configured to indicate that the terminal is a computing power node;
wherein the target radio access network is a radio access network accessed after the terminal changes the location, and the target access management function is an access management function accessed after the terminal changes the location.

8. An information processing method applied to a radio access network or an access management function, comprising:
transmitting a first instruction to a terminal;
receiving computing power data transmitted by the terminal in response to the first instruction;
transmitting the computing power data to a computing power network management center.

9. The information processing method according to claim 8, further comprising:
receiving a third instruction transmitted by the computing power network management center, wherein the third instruction is configured to request computing power data of the terminal.

10. The information processing method according to claim 9, wherein:
the first instruction is configured to indicate at least one of the following:
a unique identifier of the computing power network management center;
a perception resource type;
a computing power reporting period;
or
the third instruction comprises at least one of the following:
a unique identifier or a list of identifiers of the computing power node;
a device identifier or a list of device identifiers;
a perception resource type;
a computing power reporting period.

11. The information processing method according to claim 8, wherein the method is applied to a radio access network, and the transmitting the first instruction to the terminal comprises:
transmitting a first measurement configuration parameter to the terminal, wherein the first measurement configuration parameter indicates the first instruction; or
transmitting a first request to the terminal, wherein the first request carries the first instruction.

12. The information processing method according to claim 8, wherein the method is applied to a radio access network, and the receiving the computing power data transmitted by the terminal in response to the first instruction comprises:
receiving the computing power data transmitted by the terminal via an air interface message or a measurement report.

13. The information processing method according to claim 8, wherein the method is applied to a radio access network, and the transmitting the computing power data to the computing power network management center comprises:
forwarding the computing power data to an access management function, so that the access management function transmits the computing power data to the computing power network management center; or
transmitting the computing power data to the computing power network management center via a user plane; or
transmitting a computing power report to the computing power network management center, wherein the computing power report comprises the computing power data.

14. The information processing method according to claim 9, wherein the method is applied to a radio access network, and the radio access network comprises a target radio access network, wherein the target radio access network is a radio access network accessed after the terminal changes the location; the method further comprises:
when determining that the terminal is a computing power node, obtaining the third instruction from an original radio access network, wherein the original radio access network is a radio access network accessed before the terminal changes the location;
transmitting a fourth instruction or a second measurement configuration parameter to the terminal according to the third instruction, wherein the second measurement configuration parameter indicates the fourth instruction, and the fourth instruction is configured to request computing power data of the terminal;
transmitting a fifth instruction to the computing power network management center, wherein the fifth instruction is configured to indicate that the terminal accesses the target radio access network.

15. The information processing method according to claim 11 or 14, wherein the first measurement configuration parameter or the second measurement configuration parameter comprises at least one of the following:
a computing power measurement object, configured to indicate a resource to be perceived;
a measurement interval, configured to indicate a time interval for resource perception;
a computing power measurement trigger event.

16. The information processing method according to claim 8, wherein the method is applied to the access management function, and the transmitting the first instruction to the terminal comprises:
transmitting a computing power registration response to the terminal, wherein the computing power registration response carries the first instruction; or
transmitting a second request to the terminal, wherein the second request carries the first instruction.

17. The information processing method according to claim 8, wherein the method is applied to the access management function, and the transmitting the computing power data to the computing power network management center comprises:
receiving the computing power data forwarded by the radio access network; and
transmitting the computing power data to the computing power network management center.

18. The information processing method according to claim 9, wherein the method is applied to the access management function, and the receiving the third instruction transmitted by the computing power network management center comprises:
receiving a third request transmitted by the computing power network management center, wherein the third request carries the third instruction; or
receiving a computing power registration response transmitted by the computing power network management center, wherein the computing power registration response carries the third instruction.

19. The information processing method according to claim 9, wherein the access management function comprises an original access management function or a target access management function, and the method further comprises:
when determining that the location of the terminal changes, transmitting a sixth instruction to the computing power network management center, wherein the sixth instruction is configured to indicate that the location of the terminal changes, and the sixth instruction carries a correspondence among the terminal, the radio access network and the access management function;
wherein the original access management function is an access management function accessed before the terminal changes the location, and the target access management function is an access management function accessed after the terminal changes the location.

20. The information processing method according to claim 19, wherein the access management function comprises the target access management function, and the method further comprises:
receiving a seventh instruction transmitted by the computing power network management center, wherein the seventh instruction is configured to request computing power data of the terminal.

21. The information processing method according to claim 19 or 20, wherein the access management function comprises a target access management function, and the method further comprises:
obtaining a location change notification of the terminal subscribed by a computing power network management center from an original access management function.

22. The information processing method according to claim 9, wherein the method is applied to an access management function, and the access management function comprises a target access management function, and the method further comprises:
when determining that the terminal is a computing power node, obtaining the third instruction from an original access management function; and
transmitting an eighth instruction to the terminal according to the third instruction, wherein the eighth instruction is configured to request computing power data of the terminal;
transmitting a ninth instruction to the computing power network management center, wherein the ninth instruction is configured to indicate that the terminal accesses the target access management function.

23. The information processing method according to claim 8, wherein the computing power data comprises at least one of the following:
a current state of a resource;
a current used capacity of a resource;
a current available capacity of a resource;
a current load of a resource.

24. An information processing method applied to a computing power network management center, comprising:
transmitting a third instruction to a radio access network or an access management function, wherein the third instruction is configured to request computing power data of a terminal;
receiving the computing power data transmitted by the radio access network or the access management function in response to the third instruction.

25. The information processing method according to claim 24, wherein the transmitting the third instruction to the access management function comprises:
transmitting a third request to the access management function, wherein the third request carries the third instruction; or
transmitting a computing power registration response to the access management function, wherein the computing power registration response carries the third instruction.

26. The information processing method according to claim 24, wherein the receiving the computing power data transmitted by the radio access network or the access management function in response to the third instruction comprises:
receiving the computing power data transmitted by the radio access network via a user plane; or
receiving a computing power report transmitted by the radio access network, wherein the computing power report comprises the computing power data; or
receiving the computing power data transmitted by the access management function, wherein the computing power data is forwarded by the radio access network to the access management function.

27. The information processing method according to claim 24, wherein the third instruction comprises at least one of the following:
a unique identifier or identifier list of a computing power node;
a device identifier or device identifier list;
a type of a perceived resource;
a computing power report period.

28. The information processing method according to claim 24, further comprising:
subscribing to a location change notification of the terminal from an original access management function;
wherein the original access management function is an access management function accessed before the terminal changes the location.

29. The information processing method according to claim 28, further comprising:
when the location of the terminal changes, receiving a sixth instruction transmitted by the original access management function or a target access management function, wherein the sixth instruction is configured to indicate that the location of the terminal changes, and the sixth instruction carries a correspondence among the terminal, the radio access network and the access management function;
wherein the target access management function is an access management function accessed after the terminal changes the location.

30. The information processing method according to claim 24, further comprising:
receiving a fifth instruction transmitted by a target radio access network, wherein the fifth instruction is configured to indicate that the terminal accesses the target radio access network;
receiving the computing power data of the terminal transmitted by the target radio access network;
wherein the target radio access network is a radio access network accessed after the terminal changes the location.

31. The information processing method according to claim 24, further comprising:
receiving a ninth instruction transmitted by a target access management function, wherein the ninth instruction is configured to indicate that the terminal accesses the target access management function;
receiving the computing power data of the terminal transmitted by the target access management function;
wherein the target access management function is an access management function accessed after the terminal changes the location.

32. An information processing device applied to a terminal, comprising:
a first receiving unit, configured to receive a first instruction transmitted by a radio access network or an access management function;
a first processing unit, configured to, in response to the first instruction, transmit computing power data of the terminal to a computing power network management center through the radio access network or the access management function.

33. An information processing device applied to a radio access network or an access management function, comprising:
a first transmitting unit, configured to transmit a first instruction to a terminal;
a first receiving unit, configured to receive computing power data transmitted by the terminal in response to the first instruction;
a second transmitting unit, configured to transmit the computing power data to a computing power network management center.

34. An information processing device applied to a computing power network management center, comprising:
a first transmitting unit, configured to transmit a third instruction to a radio access network or an access management function, wherein the third instruction is configured to request computing power data of a terminal;
a first receiving unit, configured to receive the computing power data transmitted by the radio access network or the access management function in response to the third instruction.

35. An information processing device applied to a terminal, comprising a memory, a transceiver, and a processor, wherein:
the memory is configured to store a computer program;
the transceiver is configured to transmit and receive data under the control of the processor;
the processor is configured to read the computer program from the memory and perform the following operations:
receiving a first instruction transmitted by a radio access network or an access management function;
in response to the first instruction, transmitting computing power data of the terminal to a computing power network management center through the radio access network or the access management function.

36. An information processing device applied to a radio access network or an access management function, comprising a memory, a transceiver, and a processor, wherein:
the memory is configured to store a computer program;
the transceiver is configured to transmit and receive data under the control of the processor;
the processor is configured to read the computer program from the memory and perform the following operations:
transmitting a first instruction to a terminal;
receiving computing power data transmitted by the terminal in response to the first instruction;
transmitting the computing power data to a computing power network management center.

37. An information processing device applied to a computing power network management center, comprising a memory, a transceiver, and a processor, wherein:
the memory is configured to store a computer program;
the transceiver is configured to transmit and receive data under the control of the processor;
the processor is configured to read the computer program from the memory and perform the following operations:
transmitting a third instruction to a radio access network or an access management function, wherein the third instruction is configured to request computing power data of a terminal;
receiving the computing power data transmitted by the radio access network or the access management function in response to the third instruction.

38. A processor-readable storage medium, wherein the processor-readable storage medium stores a computer program, and the computer program is configured to cause a processor to execute the information processing method according to any one of claims 1 to 31.
